(19) Europäisches Patentamt / European Patent Office / Office européen des brevets

(11) **EP 3 899 523 B1**

(12) **FASCICULE DE BREVET EUROPEEN**

(45) Date de publication et mention
de la délivrance du brevet:
**21.02.2024 Bulletin 2024/08**

(21) Numéro de dépôt: **19850813.7**

(22) Date de dépôt: **19.12.2019**

(51) Classification Internationale des Brevets (IPC):
**G01N 29/06** (2006.01)  **A61B 8/00** (2006.01)
**G01N 29/26** (2006.01)  **G01N 29/44** (2006.01)
**G01N 29/46** (2006.01)  **G01S 7/52** (2006.01)
**G01S 15/89** (2006.01)

(52) Classification Coopérative des Brevets (CPC):
**G01N 29/262; G01N 29/0654; G01N 29/069;
G01N 29/4463; G01N 29/46; G01S 7/52046;
G01S 15/8915; G01S 15/8977;** G01N 2291/106

(86) Numéro de dépôt international:
**PCT/FR2019/053179**

(87) Numéro de publication internationale:
**WO 2020/128344 (25.06.2020 Gazette 2020/26)**

(54) **PROCÉDÉ D'IMAGERIE ULTRASONORE PAR TRANSFORMÉE DE FOURIER BIDIMENSIONNELLE, PROGRAMME D'ORDINATEUR ET DISPOSITIF DE SONDAGE À ULTRASONS CORRESPONDANTS**

VERFAHREN ZUR ULTRASCHALLBILDGEBUNG MITTELS ZWEIDIMENSIONALER FOURIER-TRANSFORMATION, ZUGEHÖRIGE ULTRASCHALLSONDENVORRICHTUNG UND COMPUTERPROGRAMM

METHOD FOR ULTRASOUND IMAGING USING TWO-DIMENSIONAL FOURIER TRANSFORM, CORRESPONDING ULTRASOUND PROBE DEVICE AND COMPUTER PROGRAM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2018 FR 1873636**

(43) Date de publication de la demande:
**27.10.2021 Bulletin 2021/43**

(73) Titulaires:
• **COMMISSARIAT À L'ÉNERGIE ATOMIQUE ET AUX
ÉNERGIES ALTERNATIVES
75015 Paris (FR)**
• **CENTRE NATIONAL DE LA RECHERCHE SCIENTIFIQUE
75794 Paris Cedex 16 (FR)**

(72) Inventeurs:
• **MERABET, Lucas
Paris 75014 (FR)**
• **ROBERT, Sébastien
94270 Le Kremlin-Bicêtre (FR)**
• **PRADA JULIA, Claire
75006 Paris (FR)**

(74) Mandataire: **Bonnet, Michel
Cabinet Bonnet
93, rue Réaumur
75002 Paris (FR)**

(56) Documents cités:
• **ALAN J HUNTER ET AL: "The wavenumber algorithm for full-matrix imaging using an ultrasonic array", IEEE TRANSACTIONS ON ULTRASONICS, FERROELECTRICS AND FREQUENCY CONTROL, IEEE, US, vol. 55, no. 11, 1 novembre 2008 (2008-11-01), pages 2450-2462, XP011238955, ISSN: 0885-3010, DOI: 10.1109/TUFFC.952 cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **Jiqi Cheng ET AL: "Extended high-frame rate imaging method with limited-diffraction beams", IEEE Transactions on Ultrasonics, Ferroelectrics, and Frequency Control, 1 mai 2006 (2006-05-01), pages 880-899, XP055633508, United States DOI: 10.1109/TUFFC.2006.1632680 Extrait de l'Internet: URL:https://www.eng.utoledo.edu/~jilu/pape rs_pdf/jilu/lu70_ieee_uffc06may.pdf cité dans la demande**
- **ZHANG J ET AL: "Defect detection using ultrasonic arrays: The multi-mode total focusing method", NDT & E INTERNATIONAL, BUTTERWORTH-HEINEMANN, OXFORD, GB, vol. 43, no. 2, 1 mars 2010 (2010-03-01), pages 123-133, XP026833884, ISSN: 0963-8695 [extrait le 2009-11-10]**

**Description**

La présente invention concerne un procédé d'imagerie par transformée de Fourier bidimensionnelle d'une acquisition par sondage ultrasonore d'un objet. Elle concerne également un programme d'ordinateur et un dispositif de sondage à ultrasons correspondants.

L'invention s'applique plus particulièrement à un procédé d'imagerie par transformée de Fourier bidimensionnelle d'une acquisition par sondage ultrasonore d'un objet, comportant les étapes suivantes :

- commande de L transducteurs d'émission pour M émissions successives d'ondes ultrasonores,

- commande de N transducteurs de réception de manière à recevoir simultanément et pendant une durée prédéterminée, pour chaque émission, N signaux temporels de mesure, mesurant en particulier des échos dus à des rétro-diffusions de l'émission considérée dans l'objet,

- échantillonnage temporel de chaque signal temporel de mesure en Nt échantillons successifs,

- obtention de M matrices $MR_m$, $1 \leq m \leq M$, de signaux temporels ultrasonores de taille NxNt, chaque coefficient $MR_m(u_i, t_j)$ de chaque matrice $MR_m$ représentant le $t_j$-ième échantillon temporel du signal de mesure reçu par le $u_i$-ième transducteur de réception dû à la m-ième émission,

- transformation de Fourier bidimensionnelle en lignes et colonnes de chaque matrice $MR_m$ pour l'obtention de M matrices spectrales $FTMR_m$, $1 \leq m \leq M$,

- conversion de chaque matrice spectrale $FTMR_m$ pour l'obtention de M images spectrales $FTI_m$ dans un espace de fréquences spatiales, cette conversion comportant l'application d'une relation de transformation matricielle des M matrices $FTMR_m$ en les M images spectrales $FTI_m$ et l'application d'une interpolation bilinéaire à l'aide d'un système d'équations de changement de repère,

- combinaison des M images spectrales $FTI_m$ et transformation de Fourier bidimensionnelle inverse en lignes et colonnes de l'image spectrale résultante FTI pour l'obtention d'une image ultrasonore I de visualisation de l'objet.

Un tel procédé est par exemple décrit dans l'article de Hunter et al, intitulé « The wavenumber algorithm for full-matrix imaging using an ultrasonic array », publié dans IEEE Transactions on Ultrasonics, Ferroelectrics, and Frequency Control, volume 55, n° 11, pages 2450-2462, novembre 2008. L'acquisition des signaux se fait par la technique FMC (de l'anglais « Full-Matrix Capture ») selon laquelle les L transducteurs d'émission sont commandés pour M=L émissions successives d'ondes ultrasonores cylindriques et N=L réceptions.

Un tel procédé est également décrit dans l'article de Cheng et al, intitulé « Extended high-frame rate imaging method with limited-diffraction beams », publié dans IEEE Transactions on Ultrasonics, Ferroelectrics, and Frequency Control, volume 53, n° 5, pages 880-899, mai 2006. L'acquisition des signaux se fait cette fois-ci par la technique PWI (de l'anglais « Plane Wave Imaging ») selon laquelle les L transducteurs d'émission sont commandés pour M émissions successives d'ondes ultrasonores planes et N=L réceptions. En général, M est assez nettement inférieur à L et N.

Ce procédé est avantageux par sa rapidité algorithmique et la qualité du résultat obtenu. Il fonctionne cependant dans un contexte simple d'imagerie médicale ou en contrôle non destructif lorsque les défauts à visualiser son facilement repérables en mode direct, c'est-à-dire par des rétro-diffusions directes sans réflexion interne dans l'objet 102 et sans changement de mode de propagation. Dès que la situation se complique, notamment à cause de défauts plus complexes, tels que des défauts étendus ou plans, ou lorsque ces défauts sont à proximité des bords de l'objet, la qualité de l'image résultante se dégrade rapidement.

Il peut ainsi être souhaité de prévoir un procédé d'imagerie ultrasonore par transformée de Fourier bidimensionnelle qui permette de s'affranchir au moins en partie du problème de dégradation précité.

Il est donc proposé un procédé d'imagerie par transformée de Fourier bidimensionnelle d'une acquisition par sondage ultrasonore d'un objet, comportant les étapes suivantes :

- commande de L transducteurs d'émission pour M émissions successives d'ondes ultrasonores,

- commande de N transducteurs de réception de manière à recevoir simultanément et pendant une durée prédéterminée, pour chaque émission, N signaux temporels de mesure, mesurant en particulier des échos dus à des rétro-diffusions de l'émission considérée dans l'objet,

- échantillonnage temporel de chaque signal temporel de mesure en Nt échantillons successifs,

- obtention de M matrices $MR_m$, $1 \leq m \leq M$, de signaux temporels ultrasonores de taille NxNt, chaque coefficient $MR_m(u_i, t_j)$ de chaque matrice $MR_m$ représentant le $t_j$-ième échantillon temporel du signal de mesure reçu par le $u_i$-ième transducteur de réception dû à la m-ième émission,

- transformation de Fourier bidimensionnelle en lignes et colonnes de chaque matrice $MR_m$ pour l'obtention de M matrices spectrales $FTMR_m$, $1 \leq m \leq M$,

- conversion de chaque matrice spectrale $FTMR_m$ pour l'obtention de M images spectrales $FTI_m$ dans un espace de fréquences spatiales, cette conversion comportant l'application d'une relation de transformation matricielle des M matrices $FTMR_m$ en les M images spectrales $FTI_m$ et l'application d'une interpolation bilinéaire à l'aide d'un système d'équations de changement de repère,

- combinaison des M images spectrales $FTI_m$ et transformation de Fourier bidimensionnelle inverse en lignes et colonnes de l'image spectrale résultante FTI pour l'obtention d'une image ultrasonore I de visualisation de l'objet, et dans lequel la conversion comporte :

- la prise en compte d'un changement de mode de propagation lors d'une rétro-diffusion dans l'objet sondé, par ajout d'un paramètre caractérisant ce changement de mode dans les équations de changement de repère, et/ou

- la prise en compte d'une réflexion contre une paroi de l'objet sondé, par ajout d'un terme de déphasage dans la relation de transformation matricielle.

Ainsi, la prise en compte de situations de rétro-diffusions plus complexes que les simples rétro-diffusions en mode direct à l'aide de paramètres ou termes intégrés dans les relations de transformation matricielle ou de changement de repère de l'étape de conversion permet une nette amélioration de l'image obtenue sans réel surcoût en termes de complexité algorithmique. Les défauts complexes étendus ou plans, à proximité des bords de l'objet, sont également mieux détectés, localisés et visualisés.

De façon optionnelle, les L transducteurs d'émission sont commandés pour M émissions successives d'ondes ultrasonores planes d'angles d'émission successifs $\theta_m$ différents dans M zones d'émission.

De façon optionnelle également, lors de la conversion de chaque matrice spectrale $FTMR_m$ en chaque image spectrale $FTI_m$, les équations de changement de repère prennent la forme suivante :

$$\begin{cases} kx = ku + \gamma \cdot kt \cdot \sin\theta'_m \\ kz = \pm\sqrt{kt^2 - ku^2} \pm \gamma \cdot kt \cdot \cos\theta'_m, \end{cases}$$

où ku et kt sont les nombres d'ondes, respectivement spatial et temporel, représentatifs des lignes et colonnes de chaque matrice spectrale $FTMR_m$, kx et kz sont les fréquences spatiales représentatives des lignes et colonnes de chaque image spectrale $FTI_m$, $\pm$ représente une addition ou une soustraction, $\gamma$ est le paramètre caractérisant le changement de mode de propagation lors d'une rétro-diffusion dans l'objet sondé et $\theta'_m$ est un angle incident lors de la rétro-diffusion déterminable à partir de $\theta_m$ à l'aide de la loi de Snell-Descartes.

De façon optionnelle également, le paramètre $\gamma$ est défini en tant que ratio entre la vitesse de propagation de toute onde émise selon son mode de propagation après sa rétro-diffusion dans l'objet sondé et la vitesse de propagation de cette même onde selon son mode de propagation avant sa rétro-diffusion dans l'objet sondé.

De façon optionnelle également, lors de la conversion de chaque matrice spectrale $FTMR_m$ en chaque image spectrale $FTI_m$, la relation de transformation matricielle prend la forme suivante :

$$FTI_m(kx, kz) = \sqrt{kt^2 - ku^2} \cdot e^{j\varphi(ku,kt,\theta_m)} \cdot FTMR_m(ku, kt),$$

où ku et kt sont les nombres d'ondes, respectivement spatial et temporel, représentatifs des lignes et colonnes de chaque matrice spectrale $FTMR_m$, kx et kz sont les fréquences spatiales représentatives des lignes et colonnes de chaque image spectrale $FTI_m$, e est la fonction exponentielle, j est le nombre imaginaire pur tel que $j^2 = -1$ et $\varphi$ est une fonction

de déphasage dépendant de ku, kt et $\theta_m$.

De façon optionnelle également, le procédé d'imagerie ne prend en compte aucune réflexion contre une paroi de l'objet et :

-

$$\varphi(\text{ku}, \text{kt}, \theta_m) = 0,$$

-

$$\begin{cases} \text{kx} = \text{ku} + \gamma \cdot \text{kt} \cdot \sin\theta_m \\ \text{kz} = \sqrt{\text{kt}^2 - \text{ku}^2} + \gamma \cdot \text{kt} \cdot \cos\theta_m \end{cases}.$$

De façon optionnelle également, le procédé d'imagerie prend en compte une réflexion contre un fond de l'objet situé à une distance H d'une face avant de l'objet recevant les ondes émises par les transducteurs d'émission, et :

-

$$\varphi(\text{ku}, \text{kt}, \theta_m) = H \cdot (\gamma_r \cdot \gamma \cdot \text{kt} \cdot \cos\theta_m + \gamma \cdot \text{kt} \cdot \cos\theta'_m),$$

-

$$\begin{cases} \text{kx} = \text{ku} + \gamma \cdot \text{kt} \cdot \sin\theta'_m \\ \text{kz} = \sqrt{\text{kt}^2 - \text{ku}^2} - \gamma \cdot \text{kt} \cdot \cos\theta'_m, \end{cases}$$

où $\gamma_r$ est un paramètre caractérisant un éventuel changement de mode de propagation lors de la réflexion contre le fond de l'objet sondé, notamment défini en tant que ratio entre la vitesse de propagation de toute onde émise selon son mode de propagation après sa réflexion et la vitesse de propagation de cette même onde selon son mode de propagation avant sa réflexion.

De façon optionnelle également, le procédé d'imagerie prend en compte une première réflexion contre un fond de l'objet situé à une distance H d'une face avant de l'objet recevant les ondes émises par les transducteurs d'émission, une deuxième réflexion contre la face avant de l'objet et une troisième réflexion contre le fond de l'objet, et :

-

$$\varphi(\text{ku}, \text{kt}, \theta_m) = H \cdot \left( \gamma_{r1} \cdot \gamma_{r2} \cdot \gamma \cdot \text{kt} \cdot \cos\theta_m + \gamma_{r2} \cdot \gamma \cdot \text{kt} \cdot \cos\theta''_m + \right.$$

$$\left. \sqrt{\text{kt}^2 - \text{ku}^2} + \sqrt{(\text{kt}/\gamma_{r4})^2 - \text{ku}^2} \right),$$

-

$$\begin{cases} \text{kx} = \text{ku} + \gamma \cdot \text{kt} \cdot \sin\theta'_m \\ \text{kz} = -\sqrt{\text{kt}^2 - \text{ku}^2} + \gamma \cdot \text{kt} \cdot \cos\theta'_m, \end{cases}$$

où $\gamma_{r1}$ est un paramètre caractérisant un éventuel changement de mode de propagation lors de la première réflexion contre le fond de l'objet sondé, notamment défini en tant que ratio entre la vitesse de propagation de toute onde émise selon son mode de propagation après sa première réflexion et la vitesse de propagation de cette même onde selon son mode de propagation avant sa première réflexion, $\gamma_{r2}$ est un paramètre caractérisant un éventuel changement de mode de propagation lors de la deuxième réflexion contre la face avant de l'objet sondé, notamment défini en tant que ratio entre la vitesse de propagation de toute onde émise selon son mode de propagation après sa deuxième réflexion et la vitesse de propagation de cette même onde selon son mode de propagation avant sa deuxième réflexion, $\gamma_{r4}$ est un paramètre caractérisant un éventuel changement de mode de propagation lors de la troisième réflexion contre le fond de l'objet sondé, notamment défini en tant que ratio entre la vitesse de propagation de toute onde émise selon son mode de propagation après sa troisième réflexion et la vitesse de propagation de cette même onde selon son mode de propagation avant sa troisième réflexion, et $\theta''_m$ est un angle réfléchi lors de la première réflexion contre le fond de l'objet déterminable à partir de $\theta_m$ à l'aide de la loi de Snell-Descartes.

De façon optionnelle également, la conversion de chaque matrice spectrale $\text{FTMR}_m$ pour l'obtention des M images spectrales $\text{FTI}_m$ comporte une limitation de support d'un espace spectral de chaque matrice spectrale $\text{FTMR}_m$

pour ne conserver que les ondes qui se propagent et pour supprimer toute ambiguïté de correspondance entre l'espace spectral de chaque matrice spectrale $FTMR_m$ et celui de l'image spectrale $FTI_m$ correspondante lorsque le système d'équations de changement de repère n'est pas bijectif.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé d'imagerie selon l'invention, lorsque ledit programme est exécuté sur un ordinateur.

Il est également proposé un dispositif de sondage à ultrasons, pour le sondage ultrasonore d'un objet, comportant :

- une sonde comprenant L transducteurs d'émission à ultrasons et N transducteurs de réception à ultrasons,

- des moyens de commande des L transducteurs d'émission pour M émissions successives d'ondes ultrasonores,

- des moyens de commande des N transducteurs de réception de manière à recevoir simultanément et pendant une durée prédéterminée, pour chaque émission, N signaux temporels de mesure, mesurant en particulier des échos dus à des rétro-diffusions de l'émission considérée, et

- un processeur de reconstitution d'une image ultrasonore de visualisation de l'objet, configuré pour effectuer les traitements suivants :

  • échantillonnage temporel de chaque signal temporel de mesure en $N_t$ échantillons successifs,

  • obtention de M matrices $MR_m$, $1 \leq m \leq M$, de signaux temporels ultrasonores de taille $NxN_t$, chaque coefficient $MR_m(u_i,t_j)$ de chaque matrice $MR_m$ représentant le $t_j$-ième échantillon temporel du signal de mesure reçu par le $u_i$-ième transducteur de réception dû à la m-ième émission,

  • transformation de Fourier bidimensionnelle en lignes et colonnes de chaque matrice $MR_m$ pour l'obtention de M matrices spectrales $FTMR_m$, $1 \leq m \leq M$,

  • conversion de chaque matrice spectrale $FTMR_m$ pour l'obtention de M images spectrales $FTI_m$ dans un espace de fréquences spatiales, cette conversion comportant l'application d'une relation de transformation matricielle des M matrices $FTMR_m$ en les M images spectrales $FTI_m$ et l'application d'une interpolation bilinéaire à l'aide d'un système d'équations de changement de repère,

  • combinaison des M images spectrales $FTI_m$ et transformation de Fourier bidimensionnelle inverse en lignes et colonnes de l'image spectrale résultante FTI pour l'obtention d'une image ultrasonore I de visualisation de l'objet,

  le processeur étant en outre configuré pour :

- prendre en compte un changement de mode de propagation lors d'une rétro-diffusion dans l'objet sondé, par ajout d'un paramètre caractérisant ce changement de mode dans les équations de changement de repère, et/ou

- prendre en compte une réflexion contre une paroi de l'objet sondé, par ajout d'un terme de déphasage dans la relation de transformation matricielle,

lorsqu'il effectue la conversion.

L'invention sera mieux comprise à l'aide de la description qui va suivre, donnée uniquement à titre d'exemple et faite en se référant aux dessins annexés dans lesquels :

[Fig.1] la figure 1 représente schématiquement la structure générale d'un dispositif de sondage à ultrasons selon un mode de réalisation de l'invention,

[Fig.2] la figure 2 illustre un principe d'émissions successives d'ondes ultrasonores planes pouvant être mis en oeuvre par le dispositif de la figure 1,

[Fig.3] la figure 3 illustre un premier cas de prise en compte de réflexion(s) et/ou changement(s) de mode(s) possible pour le dispositif de la figure 1,

[Fig.4] la figure 4 illustre un deuxième cas de prise en compte de réflexion(s) et/ou changement(s) de mode(s) possible pour le dispositif de la figure 1,

[Fig.5] la figure 5 illustre un troisième cas de prise en compte de réflexion(s) et/ou changement(s) de mode(s) possible pour le dispositif de la figure 1,

[Fig.6] la figure 6 illustre le résultat d'un premier exemple de conversion matricielle pouvant être effectuée par le dispositif de la figure 1, dans le cas de la figure 4,

[Fig.7] la figure 7 illustre le résultat d'un deuxième exemple de conversion matricielle pouvant être effectuée par le dispositif de la figure 1, dans le cas de la figure 4,

[Fig.8] la figure 8 illustre le résultat d'un troisième exemple de conversion matricielle pouvant être effectuée par le dispositif de la figure 1, dans le cas de la figure 4, et

[Fig.9] la figure 9 illustre les étapes successives d'un procédé d'acquisition et de traitement de signaux ultrasonores mis en oeuvre par le dispositif de la figure 1, selon un mode de réalisation de l'invention.

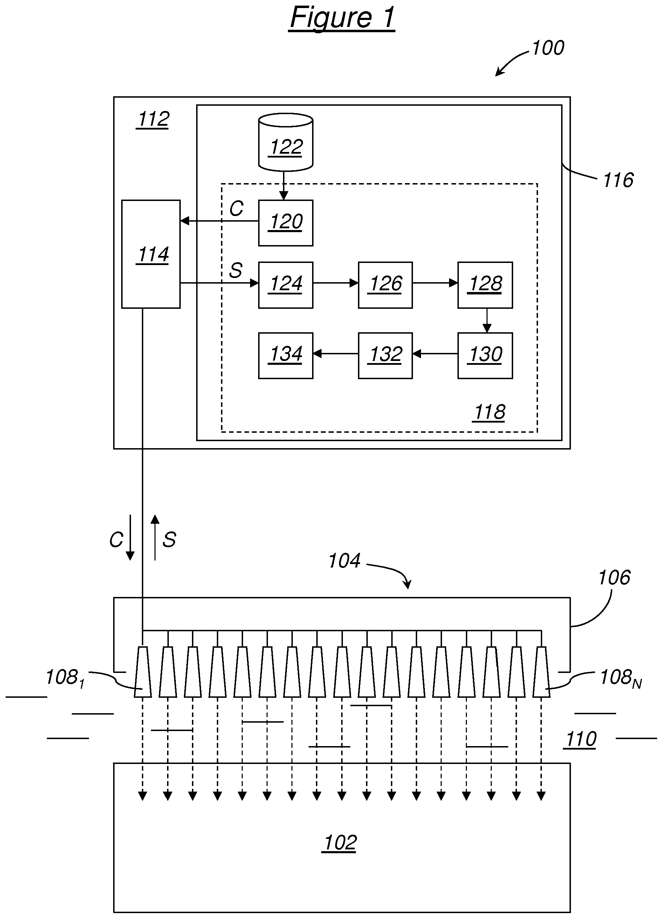

En référence à la figure 1, un dispositif de sondage 100 d'un objet 102 selon un mode de réalisation de l'invention comporte une sonde à ultrasons 104 présentant un boîtier 106, c'est-à-dire un élément de structure indéformable qui sert de référentiel attaché à la sonde 104, dans lequel sont disposés, par exemple linéairement ou matriciellement, $L = N$ transducteurs $108_1$, ...,$108_N$ fixes ou mobiles disposés en réseau. Il s'agit donc d'une sonde multi-éléments.

L'objet 102 est par exemple une pièce mécanique que l'on souhaite examiner par contrôle non destructif ou bien, dans un contexte médical, une partie de corps humain ou animal que l'on souhaite contrôler de manière non invasive. Dans le mode de réalisation de la figure 1, l'objet 102 est immergé dans un liquide, tel que de l'eau 110, et la sonde 104 est maintenue à distance de l'objet 102 afin que l'eau 110 les sépare. Mais dans un autre mode de réalisation équivalent, la sonde 104 pourrait être au contact direct de l'objet 102. C'est même cet autre mode de réalisation qui sera plutôt abordé dans la suite.

Les transducteurs $108_1$, ..., $108_N$ sont conçus pour émettre individuellement des ondes ultrasonores en direction de l'objet 102 en réponse à des signaux de commande identifiés sous la référence générale C, selon des directions principales parallèles les unes aux autres, indiquées par des flèches en pointillés sur la figure 1, et dans un plan principal qui est celui de la figure.

Les transducteurs $108_1$, ..., $108_N$ sont en outre conçus pour détecter des échos des ondes ultrasonores se réfléchissant ou se rétro-diffusant sur et dans l'objet 102 et pour fournir des signaux de mesure identifiés sous la référence générale S et correspondant à ces échos. Ainsi, dans l'exemple non limitatif de la figure 1, les transducteurs $108_1$, ...,$108_N$ remplissent à la fois les fonctions d'émission et de réception, mais des récepteurs différents des émetteurs pourraient également être prévus dans des boîtiers différents et indépendants tout en restant conformes avec les principes de l'invention. De plus, le nombre L d'émetteurs pourrait tout à fait être différent du nombre N de récepteurs.

Le dispositif de sondage 100 comporte en outre un circuit électronique 112 de commande des transducteurs $108_1$, ...,$108_N$ de la sonde 104 et de traitement des signaux de mesure S. Ce circuit électronique 112 est connecté à la sonde 104 afin de lui transmettre les signaux de commande C et afin de recevoir les signaux de mesure S. Le circuit électronique 112 est par exemple celui d'un ordinateur. Il présente une unité centrale de traitement 114, telle qu'un microprocesseur conçu pour émettre vers la sonde 104 les signaux de commande C et pour recevoir de la sonde 104 les signaux de mesure S, et une mémoire 116 dans laquelle est notamment enregistré un programme d'ordinateur 118.

Le programme d'ordinateur 118 comporte tout d'abord des instructions 120 pour générer les signaux C de commande des transducteurs $108_1$, ...,$108_N$ et recevoir leurs échos. Ces instructions sont plus précisément programmées de manière à :

- activer les $L = N$ transducteurs $108_1$, ...,$108_N$ en tant qu'émetteurs pour M émissions successives d'ondes ultrasonores,

- activer les transducteurs $108_1$, ...,$108_N$ en tant que récepteurs pour, suite à chaque émission, recevoir simultanément, par ces N récepteurs et pendant une durée prédéterminée de la profondeur d'inspection souhaitée, N signaux temporels de mesure, mesurant en particulier des échos dus à des rétro-diffusions de chaque émission considérée dans l'objet 102.

En particulier, des ondes ultrasonores planes présentant M angles d'émission successifs différents dans M zones d'émission de l'objet 102 peuvent être obtenues à l'émission en appliquant aux transducteurs $108_1$, ...,$108_N$ des

lois de retards enregistrées en mémoire 116 dans une base 122 de lois de retards. Chaque loi de retards définit des retards à appliquer aux transducteurs $108_1$, ...,$108_N$ en émission, de manière à engendrer une onde ultrasonore plane à un angle d'émission souhaité parmi les M angles d'émission successifs différents. Il est donc prévu autant de lois de retards que d'émissions successives souhaitées.

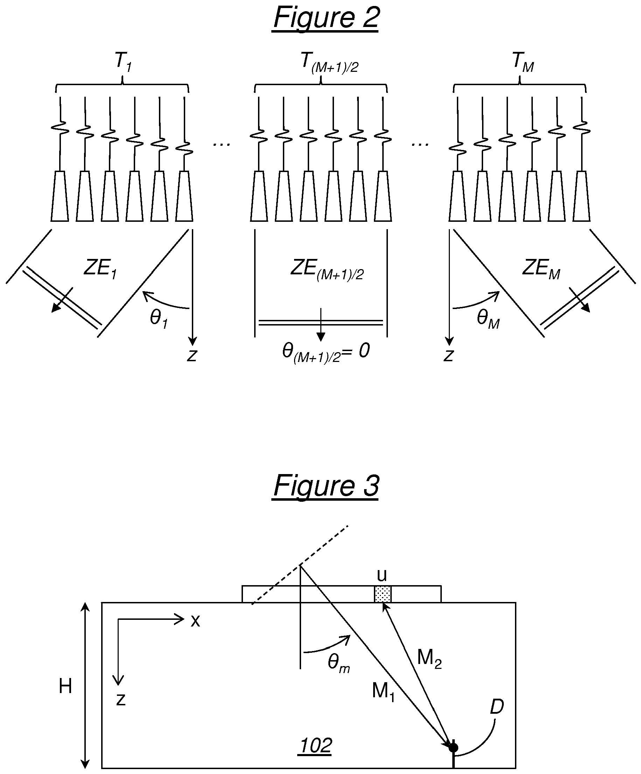

Comme illustré sur la figure 2 dans un cas particulier où le nombre M d'émissions successives est impair et où les angles d'émissions se succèdent avec un pas constant dans un secteur angulaire symétrique par rapport à la direction z orthogonale au réseau de transducteurs $108_1$, ...,$108_N$, la première émission d'onde plane est associée à une loi de retards $T_1$ portant sur des signaux émis par les transducteurs $108_1$, ...,$108_N$, permettant l'émission d'une onde plane d'angle d'émission $\theta_1$ par rapport à la direction z dans une première zone d'émission $ZE_1$ partiellement située en dehors de l'ouverture de la sonde 104. La $(M+1)/2$-ième émission d'onde plane est associée à une loi de retards $T_{(M+1)/2}$ uniforme pour l'émission d'une onde plane d'angle d'émission nul par rapport à la direction z dans une $(M+1)/2$-ième zone d'émission $ZE_{(M+1)/2}$ couvrant l'ouverture de la sonde 104. Enfin, la dernière émission d'onde plane est associée à une loi de retards $T_M$ permettant l'émission d'une onde plane d'angle d'émission $\theta_M = - \theta_1$ par rapport à la direction z dans une dernière zone d'émission $ZE_M$ partiellement située en dehors de l'ouverture de la sonde 104. D'une façon générale, la m-ième émission d'onde plane est associée à une loi de retards $T_m$ permettant l'émission d'une onde plane d'angle d'émission $\theta_m = \theta_1 + (m - 1).(\theta_M - \theta_1)/(M - 1)$ par rapport à la direction z. En réalité, le plus souvent M est pair : il n'y a alors pas d'émission à 0° et le pas angulaire n'est pas constant.

Compte tenu de la technique d'acquisition employée, la zone à imager doit être contenue dans l'union des M zones d'émissions successives. Il en résulte que cette zone peut s'étendre au-delà de l'ouverture de la sonde 104, comme cela est visible sur la figure 2. En particulier, la zone imagée peut prendre la forme d'une zone sectorielle délimitée par les extrémités des zones d'émission d'angles maximal et minimal. On peut ainsi obtenir une image de type S-scan.

En variante, et comme avantageusement rendu possible par le principe d'acquisition des signaux par émissions successives d'ondes planes, les M angles d'émission successifs différents $\theta_1$ à $\theta_M$ peuvent être définis autour d'une direction moyenne $\theta_{(M+1)/2}$ non perpendiculaire au réseau de transducteurs $108_1$, ...,$108_N$. En particulier, lorsqu'il s'agit de détecter des défauts tels qu'une fissure disposée au fond d'un objet à inspecter en contrôle non destructif, cette fissure étant en outre perpendiculaire au réseau de transducteurs, il est préférable de décaler latéralement la zone à inspecter par rapport à la sonde 104 et d'émettre autour d'une moyenne de 45° par exemple. La zone à inspecter peut même être décalée au point de sortir complètement de l'ouverture de la sonde 104.

De manière à améliorer la qualité des signaux de mesure exploités pour reconstituer la zone imagée, il est en outre possible d'appliquer une apodisation des signaux ultrasonores émis par les transducteurs $108_1$, ...,$108_N$ pour former une onde ultrasonore plane de meilleure qualité, sans distorsion subie à cause des effets de bords. Une telle apodisation est réalisée à l'occasion de chaque émission spatialement sur l'ensemble des transducteurs à l'aide d'une fenêtre d'apodisation telle qu'une loi d'amplitude trapézoïdale, de Hanning ou de Blackman-Harris. Elle a pour résultat de fournir une meilleure définition des zones d'émission successives.

Selon d'autres modes de réalisation que celui illustré par les figures 1 et 2 et abordé dans la présente description, des ondes autres que des ondes planes peuvent être émises, par exemple des ondes cylindriques comme dans l'article de Hunter et al précité. Il suffit d'adapter le nombre de transducteurs à solliciter (entre 1 et L) et les lois de retards en conséquence, en fonction des acquisitions et applications visées. Néanmoins, dans la suite de la description et dans le souci de simplifier les calculs qui vont être présentés, ce sont des émissions planes telles que celles illustrées par la figure 2 qui sont retenues.

En référence de nouveau à la figure 1, à la réception des signaux résultant de chacune des M émissions successives, l'ensemble S des NxM signaux temporels de mesure reçus par les N transducteurs $108_1$, ...,$108_N$ est renvoyé par la sonde 104 à l'unité centrale de traitement 114. De façon connue en soi, ces signaux temporels sont échantillonnés et numérisés en $N_t$ échantillons successifs avant d'être soumis pour traitement par le programme d'ordinateur 118.

Le programme d'ordinateur 118 comporte alors en outre des instructions 124 pour construire M matrices $MR_m$, $1 \le m \le M$, de signaux temporels ultrasonores de taille $NxN_t$, qualifiées de matrices des ondes planes. Chaque coefficient $MR_m(u_i,t_j)$ de chaque matrice $MR_m$ représentant le t;-ième échantillon temporel du signal de mesure reçu par le $u_i$-ième transducteur de réception en réponse à la m-ième émission.

De façon optionnelle, le programme d'ordinateur 118 comporte en outre des instructions 126 pour effectuer un filtrage temporel de chaque matrice $MR_m$, ce filtrage visant à supprimer toute information se trouvant à des temps de vol exclus de la zone d'intérêt dans l'objet 102.

Le programme d'ordinateur 118 comporte en outre des instructions 128 pour transformer chaque matrice $MR_m$ en une matrice $FTMR_m$ de signaux fréquentiels par transformée de Fourier bidimensionnelle en lignes et colonnes, avantageusement par transformée de Fourier bidimensionnelle discrète et, plus avantageusement encore, par calcul bidimensionnel de FFT (de l'anglais « Fast Fourier Transform ») si les nombres N et $N_t$ de lignes et colonnes de chaque matrice $MR_m$ le permettent, c'est-à-dire s'ils correspondent à des puissances de 2. On obtient ainsi M matrices spectrales

FTMR$_m$, 1≤m≤M, dont les coefficients FTMR$_m$(ku$_i$,kt$_j$) sont des valeurs spectrales prises en fonctions de valeurs discrètes ku$_i$, 1≤i≤N, d'un nombre d'onde spatial ku (relatif aux dispositions relatives des transducteurs de réception) et de valeurs discrètes kt$_j$, 1≤j≤N$_t$, d'un nombre d'onde temporel kt (relatif aux instants d'échantillonnages).

Le programme d'ordinateur 118 comporte en outre des instructions 130 pour convertir chaque matrice spectrale FTMR$_m$ en une image spectrale FTI$_m$ dans un espace de fréquences spatiales respectivement relatives aux axes en abscisses et ordonnées de l'image finale que l'on souhaite obtenir. On obtient ainsi M images spectrales FTI$_m$, 1≤m≤M, de taille N$_x$xN$_z$ et de coefficients FTI$_m$(kx$_i$,kz$_j$) où les kx$_i$, 1≤i≤N$_x$, sont des valeurs discrètes d'une fréquence spatiale kx relative à l'axe des abscisses choisi (par exemple parallèle à celui des transducteurs) et où les kz$_j$, 1≤j≤N$_z$, sont des valeurs discrètes d'une fréquence spatiale kz relative à l'axe des ordonnées choisi (par exemple perpendiculaire à celui des transducteurs). Comme par exemple enseigné dans le document Cheng et al précité, cette conversion comporte l'application d'une relation de transformation matricielle des M matrices FTMR$_m$ en les M images spectrales FTI$_m$ et l'application d'une interpolation bilinéaire à l'aide d'un système d'équations de changement de repère. Plus précisément, la transformation matricielle donne des valeurs pour les images spectrales en des points (kx'$_i$,kz'$_j$), 1≤i≤N et 1≤j≤N$_t$, qui ne correspondent pas aux valeurs discrètes (kx$_i$,kz$_j$) choisies mais dépendent du système d'équations de changement de repère qui lie les valeurs des fréquences spatiales kx et kz aux valeurs des nombres d'ondes ku et kt. Les coefficients FTI$_m$(kx$_i$,kz$_j$) souhaités, avec 1≤i≤N$_x$ et 1≤j≤N$_z$, peuvent néanmoins être retrouvés facilement par interpolation bilinéaire des valeurs FTI$_m$(kx'$_i$,kz'$_j$) obtenues par transformation matricielle, à l'aide du système d'équations de changement de repère qui permet de connaître le positionnement des points (kx'$_i$,kz'$_j$), 1≤i≤N et 1≤j≤N$_t$.

Le programme d'ordinateur 118 comporte en outre des instructions 132 pour réaliser une combinaison des M images spectrales FTI$_m$ en une seule image spectrale résultante FTI de coefficients FTI(kx$_i$,kz$_j$), 1≤i≤N$_x$ et 1≤j≤N$_z$. Dans un mode de réalisation simple et rapide, l'image spectrale FTI peut résulter d'une somme en chaque pixel (kx$_i$,kz$_j$) des M images spectrales FTI$_m$.

Enfin, le programme d'ordinateur 118 comporte des instructions 134 pour transformer l'image spectrale résultante FTI en une image ultrasonore I de visualisation de l'objet 102 par transformée de Fourier inverse bidimensionnelle en lignes et colonnes, avantageusement par transformée de Fourier discrète inverse, et, plus avantageusement encore, par calcul bidimensionnel de IFFT (de l'anglais « Inverse Fast Fourier Transform ») si les nombres N$_x$ et N$_z$ de lignes et colonnes de l'image spectrale résultante FTI le permettent, c'est-à-dire s'ils correspondent à des puissances de 2. L'image ultrasonore I de visualisation de l'objet 102 est de taille N$_x$xN$_z$ et de valeurs de pixels I(x$_i$,z$_j$).

Selon la démarche enseignée dans le document Hunter et al précité, en adaptant les calculs exploitant l'identité de Weyl aux M émissions d'ondes planes illustrées par la figure 2, on obtient la relation de transformation matricielle générale suivante entre les M matrices FTMR$_m$ et les M images spectrales FTI$_m$ :

[Math. 1]

$$\text{FTI}_m(\text{kx}, \text{kz}) = \sqrt{\text{kt}^2 - \text{ku}^2} \cdot \text{FTMR}_m(\text{ku}, \text{kt}).$$

Plus concrètement, selon les notations discrètes précédentes, pour tout m, 1≤m≤M, cela donne :

[Math. 2]

$$\forall\,(i,j)\,,\, 1 \le i \le N,\, 1 \le j \le N_t, \qquad \text{FTI}_m\big(\text{kx}'_i, \text{kz}'_j\big) = \sqrt{\text{kt}_j{}^2 - \text{ku}_i{}^2} \cdot \text{FTMR}_m\big(\text{ku}_i, \text{kt}_j\big).$$

On obtient en outre le système d'équations de changement de repère général suivant, qui lie les valeurs des fréquences spatiales kx et kz aux valeurs des nombres d'ondes ku et kt :

[Math. 3]

$$\begin{cases} \text{kx} = \text{ku} + \text{kt} \cdot \sin\theta_m \\ \text{kz} = \sqrt{\text{kt}^2 - \text{ku}^2} + \text{kt} \cdot \cos\theta_m \end{cases}.$$

Plus concrètement, selon les notations discrètes précédentes, pour tout m, 1≤m≤M, cela donne :

[Math. 4]

$$\forall (i,j), 1 \leq i \leq N, 1 \leq j \leq N_t, \quad \begin{cases} kx'_i = ku_i + kt_j \cdot \sin\theta_m \\ kz'_j = \sqrt{kt_j^2 - ku_i^2} + kt_j \cdot \cos\theta_m \end{cases}$$

Mais ces équations ne sont valides que pour des rétro-diffusions en mode direct, c'est-à-dire sans aucune réflexion contre un bord de l'objet observé 102, et sans changement de mode de propagation lors de la rétro-diffusion. Elles sont donc adaptées à la plupart des applications médicales et à des recherches de défauts simples dans des contextes eux-mêmes simples en contrôle non destructif. Mais elles ne sont pas adaptées pour des contextes de contrôles non destructifs plus complexes tels que ceux mentionnés précédemment.

Conformément à la présente invention, il est avantageusement prévu d'intégrer des paramètres ou termes de changement de mode de propagation ou réflexion(s) contre au moins une paroi de l'objet 102 dans les équations précitées. Plus précisément, au moins l'un des éléments suivants est intégré :

-   un paramètre $\gamma$ caractérisant un changement de mode de propagation lors d'une rétro-diffusion contre un défaut de l'objet 102, intégré dans le système d'équations de changement de repère précité, et/ou

-   un terme de déphasage $e^{j\varphi(ku,kt,\theta_m)}$ caractérisant au moins une réflexion contre une paroi de l'objet 102, intégré dans la relation de transformation matricielle précitée, où e est la fonction exponentielle, j est le nombre imaginaire pur tel que $j^2 = -1$ et $\varphi$ est une fonction de déphasage dépendant a *priori* de ku, kt et $\theta_m$.

Il peut également y avoir un changement de mode lors de toute réflexion contre une paroi de l'objet 102. Il convient de noter à cet égard que le nombre d'onde temporel kt dépend du mode de propagation, de sorte que le nombre d'onde correspondant à une onde émise incidente peut différer du nombre d'onde correspondant à cette même onde lorsqu'elle a été réfléchie au moins une fois ainsi qu'après rétro-diffusion, du fait d'une prise en compte possible de changements de modes de propagation. En revanche, ce qui reste constant pour une même onde quels que soient les changements de modes, c'est le produit du nombre d'onde et de la vitesse de propagation de l'onde, c'est-à-dire sa fréquence angulaire. Par convention, on notera donc dans la suite kt le nombre d'onde correspondant à l'onde dans son mode de propagation tel qu'il se présente juste après sa rétro-diffusion.

Ainsi, en prenant en compte au moins une réflexion des ondes émises contre au moins une paroi de l'objet 102, la relation de transformation matricielle générale précitée entre les M matrices $FTMR_m$ et les M images spectrales $FTI_m$ devient plus précisément :

[Math. 5]

$$FTI_m(kx, kz) = \sqrt{kt^2 - ku^2} \cdot e^{j\varphi(ku,kt,\theta_m)} \cdot FTMR_m(ku, kt).$$

En prenant en compte un changement de mode de propagation lors d'une rétro-diffusion contre un défaut de l'objet 102, le système d'équations de changement de repère précité devient plus précisément :

[Math. 6]

$$\begin{cases} kx = ku + \gamma \cdot kt \cdot \sin\theta'_m \\ kz = \pm\sqrt{kt^2 - ku^2} \pm \gamma \cdot kt \cdot \cos\theta'_m \end{cases}$$

Dans ce système d'équations, le symbole $\pm$ représente une addition ou une soustraction selon le nombre de réflexion(s) contre une ou plusieurs parois de l'objet 102. L'angle $\theta'_m$ est quant à lui l'angle incident lors de la rétro-diffusion. Il peut être obtenu simplement à partir de l'angle $\theta_m$ à l'aide de la loi de Snell-Descartes et en fonction du nombre de réflexion(s) précédant la rétro-diffusion considérée. Comme $\theta_m$, il est exprimé en fonction de l'axe z illustré sur la figure 2, c'est-à-dire un axe orthogonal au plan ou à l'axe des transducteurs.

Dans ce système d'équations également, $\gamma$ est le paramètre caractérisant le changement de mode de propagation d'une onde lors d'une rétro-diffusion dans l'objet 102. Lorsqu'il est intégré de cette façon dans le système d'équations, il est défini en tant que ratio entre la vitesse de propagation de l'onde émise selon son mode de propagation après sa rétro-diffusion dans l'objet sondé et la vitesse de propagation de cette même onde selon son mode de propagation avant sa rétro-diffusion dans l'objet sondé. Par conséquent, si kt est le nombre d'onde correspondant à l'onde après rétro-diffusion, $\gamma$.kt est le nombre d'onde correspondant à l'onde incidente lors de la rétro-diffusion.

Pour préciser davantage la relation et le système d'équations précités, il convient de distinguer différents cas possibles de réflexion(s) et changement(s) de mode(s).

Conformément à un premier cas de prise en compte de réflexion(s) et/ou changement(s) de mode(s) possible, aucune réflexion contre une paroi de l'objet n'est prise en compte, mais un changement de mode de propagation est pris en compte lors de toute rétro-diffusion contre un défaut D de l'objet 102. Ce premier cas est illustré par la figure 3. L'axe x des abscisses choisi est parallèle aux transducteurs, au plan de la face avant et au plan du fond de l'objet 102. L'axe z des ordonnées choisi, à partir duquel sont définis les angles $\theta_m$ et $\theta'_m$, est quant à lui orthogonal aux transducteurs, au plan de la face avant et au plan du fond de l'objet 102. Toute onde incidente lors de la rétro-diffusion provenant directement de la sonde 104 sans aucune réflexion, on remarque que $\theta'_m = \theta_m$. Le défaut D est par exemple d'un défaut de cisaillement étendu situé en fond d'objet 102. Les calculs exploitant l'identité de Weyl aux M émissions d'ondes planes illustrées par la figure 2 donnent alors, pour la relation de transformation matricielle générale précitée :

[Math. 7]

$$FTI_m(kx, kz) = \sqrt{kt^2 - ku^2} \cdot FTMR_m(ku, kt).$$

En d'autres termes :

[Math. 8]

$$\varphi(ku, kt, \theta_m) = 0.$$

Les calculs exploitant l'identité de Weyl aux M émissions d'ondes planes illustrées par la figure 2 donnent également, pour le système d'équations de changement de repère précité :

[Math. 9]

$$\begin{cases} kx = ku + \gamma \cdot kt \cdot \sin\theta_m \\ kz = \sqrt{kt^2 - ku^2} + \gamma \cdot kt \cdot \cos\theta_m \end{cases}$$

Selon ce premier cas, le paramètre $\gamma$ est différent de 1. Il est égal au ratio $c_2/c_1$ entre la vitesse de propagation $c_2$ de l'onde rétro-diffusée en mode $M_2$ et la vitesse de propagation $c_1$ de l'onde incidente en mode $M_1$ avant sa rétro-diffusion contre le défaut D. Il est strictement inférieur à 1 si le changement de mode est celui d'un mode de propagation longitudinal noté L (avant rétro-diffusion) en un mode de propagation transversal noté T (après rétro-diffusion). Il est au contraire strictement supérieur à 1 si le changement de mode est celui d'un mode de propagation T (avant rétro-diffusion) en un mode de propagation L (après rétro-diffusion). On remarque aussi que si l'on ne prenait pas en compte de changement de mode de propagation à la rétro-diffusion, $\gamma = 1$, on retrouverait la première relation et le premier système d'équations définis précédemment résultant de l'adaptation précitée de l'enseignement du document de Cheng et al.

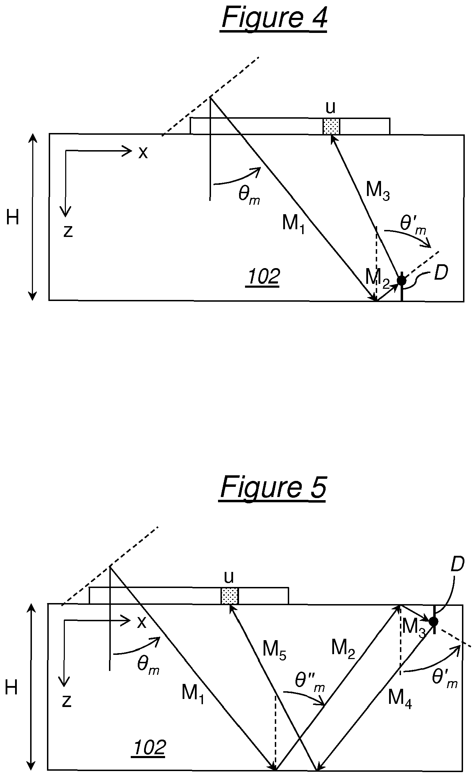

Conformément à un deuxième cas de prise en compte de réflexion(s) et/ou changement(s) de mode(s) possible, généralement appelé « mode demi bond », une réflexion contre le fond de l'objet 102, à une distance H de sa face avant, est prise en compte, et un changement de mode de propagation peut être pris en compte lors de cette réflexion ou de toute rétro-diffusion ultérieure contre un défaut de l'objet 102. Ce deuxième cas est illustré par la figure 4. L'axe x des abscisses choisi est toujours parallèle aux transducteurs, au plan de la face avant et au plan du fond de l'objet 102. L'axe z des ordonnées choisi, à partir duquel sont définis les angles $\theta_m$ et $\theta'_m$, est lui aussi toujours orthogonal aux transducteurs, au plan de la face avant et au plan du fond de l'objet 102. Il s'agit encore d'un défaut de cisaillement étendu situé en fond d'objet 102. Les calculs exploitant l'identité de Weyl aux M émissions d'ondes planes illustrées par la figure 2 donnent alors, pour la relation de transformation matricielle générale précitée :

[Math. 10]

$$FTI_m(kx, kz) = \sqrt{kt^2 - ku^2} \cdot e^{jH \cdot (\gamma_r \cdot \gamma \cdot kt \cdot \cos\theta_m + \gamma \cdot kt \cdot \cos\theta'_m)} \cdot FTMR_m(ku, kt).$$

En d'autres termes :

[Math. 11]

$$\varphi(ku, kt, \theta_m) = H \cdot (\gamma_r \cdot \gamma \cdot kt \cdot \cos\theta_m + \gamma \cdot kt \cdot \cos\theta'_m).$$

Dans cette relation de transformation matricielle, $\gamma_r$ est le paramètre caractérisant l'éventuel changement de mode de propagation lors de la réflexion contre le fond de l'objet sondé. Il est défini en tant que ratio $c_2/c_1$ entre la vitesse de propagation $c_2$ de l'onde émise selon son mode de propagation $M_2$ après sa réflexion contre le fond de l'objet sondé et la vitesse de propagation $c_1$ de cette même onde selon son mode de propagation $M_1$ avant sa réflexion contre le fond de l'objet sondé. Le paramètre $\gamma$ est alors défini en tant que ratio $c_3/c_2$ où $c_3$ est la vitesse de propagation de l'onde rétro-diffusée en mode $M_3$. Par conséquent, si kt est le nombre d'onde correspondant à l'onde après rétro-diffusion, $\gamma_r \cdot \gamma \cdot$kt est le nombre d'onde correspondant à l'onde incidente émise avant sa réflexion contre le fond de l'objet 102 et $\gamma \cdot$kt est le nombre d'onde correspondant à l'onde incidente après sa réflexion contre le fond de l'objet 102 mais avant sa rétro-diffusion ultérieure. Selon ce deuxième cas, le paramètre $\gamma$ peut être égal à 1 s'il n'y a pas de prise en compte de changement de mode de propagation lors de la rétro-diffusion. De même, $\gamma_r$ est égal à 1 s'il n'y a pas de prise en compte de changement de mode de propagation lors de la réflexion contre le fond de l'objet 102. Il est au contraire différent de 1 dès que l'on prend en compte un changement de mode de propagation à l'occasion de cette réflexion. Plus précisément, Il est strictement inférieur à 1 si le changement de mode est celui d'un mode de propagation L (avant réflexion) en un mode de propagation T (après réflexion). Il est strictement supérieur à 1 si le changement de mode est celui d'un mode de propagation T (avant réflexion) en un mode de propagation L (après réflexion).
Les calculs exploitant l'identité de Weyl aux M émissions d'ondes planes illustrées par la figure 2 donnent également, pour le système d'équations de changement de repère précité :

[Math. 12]

$$\begin{cases} kx = ku + \gamma \cdot kt \cdot \sin\theta'_m \\ kz = \sqrt{kt^2 - ku^2} - \gamma \cdot kt \cdot \cos\theta'_m \end{cases}$$

Dans le cas particulier d'une réflexion suivie d'une rétro-diffusion sans aucun changement de mode de propagation ($\theta'_m = \theta_m$), on obtient la relation simplifiée suivante :

[Math. 13]

$$FTI_m(kx, kz) = \sqrt{kt^2 - ku^2} \cdot e^{j2H \cdot kt \cdot \cos\theta_m} \cdot FTMR_m(ku, kt).$$

On obtient également le système d'équations de changement de repère simplifié suivant :

[Math. 14]

$$\begin{cases} kx = ku + kt \cdot \sin\theta_m \\ kz = \sqrt{kt^2 - ku^2} - kt \cdot \cos\theta_m \end{cases}$$

Conformément à un troisième cas de prise en compte de réflexion(s) et/ou changement(s) de mode(s) possible, généralement appelé « mode bond complet », une première réflexion contre le fond de l'objet 102 est prise en compte, une deuxième réflexion contre la face avant de l'objet 102 est prise en compte, une troisième réflexion contre le fond de l'objet 102 est prise en compte, et un changement de mode de propagation peut être pris en compte lors de chacune de ces trois réflexions ou de toute rétro-diffusion contre un défaut de l'objet 102 entre les deuxième et troisième réflexions. Ce troisième cas est illustré par la figure 5. L'axe x des abscisses choisi est toujours parallèle aux transducteurs, au plan de la face avant et au plan du fond de l'objet 102. L'axe z des ordonnées choisi, à partir duquel sont définis les angles $\theta_m$ et $\theta'_m$, est lui aussi toujours orthogonal aux transducteurs, au plan de la face avant et au plan du fond de l'objet 102. L'angle $\theta'_m$ reste l'angle incident lors de la rétro-diffusion, c'est-à-dire celui après la deuxième réflexion contre la face avant de l'objet. En revanche, on introduit un autre angle $\theta''_m$, lui aussi défini à partir de l'axe z, correspondant à l'angle de l'onde après sa première réflexion contre le fond de l'objet 102. Les calculs exploitant l'identité de Weyl aux M émissions d'ondes planes illustrées par la figure 2 donnent alors, pour la relation de transformation matricielle générale précitée :

[Math. 15]

$$\mathrm{FTI}_m(kx, kz) = \sqrt{kt^2 - ku^2} \cdot e^{jH \cdot \left( \gamma_{r1} \cdot \gamma_{r2} \cdot \gamma \cdot kt \cdot \cos \theta_m + \gamma_{r2} \cdot \gamma \cdot kt \cdot \cos \theta''_m + \sqrt{kt^2 - ku^2} + \sqrt{(kt/\gamma_{r4})^2 - ku^2} \right)}$$
$$\cdot \mathrm{FTMR}_m(ku, kt).$$

En d'autres termes :

[Math. 16]

$$\varphi(ku, kt, \theta_m) = H \cdot \left( \gamma_{r1} \cdot \gamma_{r2} \cdot \gamma \cdot kt \cdot \cos \theta_m + \gamma_{r2} \cdot \gamma \cdot kt \cdot \cos \theta''_m + \sqrt{kt^2 - ku^2} + \right.$$
$$\left. \sqrt{(kt/\gamma_{r4})^2 - ku^2} \right).$$

Dans cette relation de transformation matricielle, kt est toujours le nombre d'onde juste après rétro-diffusion par le défaut, correspondant ici au mode de propagation $M_4$. Dans cette relation de transformation matricielle également, $\gamma_{r1}$ est le paramètre caractérisant l'éventuel changement de mode de propagation lors de la première réflexion contre le fond de l'objet sondé, $\gamma_{r2}$ est le paramètre caractérisant l'éventuel changement de mode de propagation lors de la deuxième réflexion contre la face avant de l'objet sondé et $\gamma_{r4}$ est le paramètre caractérisant l'éventuel changement de mode de propagation lors de la troisième réflexion contre le fond de l'objet sondé. Chaque $\gamma_{ri}$, pour i = 1, 2 ou 4, est défini en tant que ratio $c_{i+1}/c_i$ entre la vitesse de propagation $c_{i+1}$ de l'onde émise selon son mode de propagation $M_{i+1}$ après réflexion et la vitesse de propagation $c_i$ de cette même onde selon son mode de propagation $M_i$ avant réflexion. Le paramètre $\gamma$ est alors défini en tant que ratio $c_4/c_3$ où $c_4$ est la vitesse de propagation de l'onde rétro-diffusée en mode $M_4$ et $c_3$ est la vitesse de propagation de l'onde juste avant rétro-diffusion en mode $M_3$. Par conséquent, si kt est toujours le nombre d'onde correspondant à l'onde juste après rétro-diffusion, $\gamma_{r1} \cdot \gamma_{r2} \gamma \cdot kt$ est le nombre d'onde correspondant à l'onde incidente émise avant sa première réflexion contre le fond de l'objet 102 et $\gamma_{r2} \cdot \gamma \cdot kt$ correspond à l'onde juste après cette première réflexion. Enfin, $kt/\gamma_{r4}$ est le nombre d'onde correspondant à l'onde reçue par les transducteurs. Selon ce troisième cas, le paramètre $\gamma$ peut être égal à 1 s'il n'y a pas de prise en compte de changement de mode de propagation lors de la rétro-diffusion. De même, $\gamma_{ri}$, pour i = 1, 2 ou 4, est égal à 1 s'il n'y a pas de prise en compte de changement de mode de propagation lors de la réflexion correspondante dans l'objet 102. Il est au contraire différent de 1 dès que l'on prend en compte un changement de mode de propagation à l'occasion de cette réflexion. Plus précisément, Il est strictement inférieur à 1 si le changement de mode est celui d'un mode de propagation L (avant la réflexion) en un mode de propagation T (après la réflexion). Il est strictement supérieur à 1 si le changement de mode est celui d'un mode de propagation T (avant la réflexion) en un mode de propagation L (après la réflexion).

Les calculs exploitant l'identité de Weyl aux M émissions d'ondes planes illustrées par la figure 2 donnent également, pour le système d'équations de changement de repère précité :

[Math. 17]

$$\begin{cases} kx = ku + \gamma \cdot kt \cdot \sin\theta'_m \\ kz = -\sqrt{kt^2 - ku^2} + \gamma \cdot kt \cdot \cos\theta'_m \end{cases}$$

Dans le cas particulier de deux réflexions successives suivies d'une rétro-propagation suivie d'une dernière réflexion sans aucun changement de mode de propagation ($\theta'_m = \theta''_m = \theta_m$), on obtient la relation simplifiée suivante :

[Math. 18]

$$FTI_m(kx, kz) = \sqrt{kt^2 - ku^2} \cdot e^{j2H\cdot(kt\cdot\cos\theta_m + \sqrt{kt^2-ku^2})} \cdot FTMR_m(ku, kt).$$

On obtient également le système d'équations de changement de repère simplifié suivant :

[Math. 19]

$$\begin{cases} kx = ku + kt \cdot \sin\theta_m \\ kz = -\sqrt{kt^2 - ku^2} + kt \cdot \cos\theta_m \end{cases}$$

Selon un aspect secondaire de l'invention, il est avantageux de limiter par fenêtrage les supports des espaces spectraux respectifs des matrices et images spectrales $FTMR_m$ et $FTI_m$. En limitant ces supports, on bénéficie en effet d'un gain en mémoire et surtout en calculs. Il est également avantageux de remarquer qu'en fonction des différents cas possibles de prise en compte de réflexion(s) et/ou changement(s) de mode(s), le système d'équations de changement de repère peut être bijectif ou non. En cas de non bijectivité, le support peut être encore plus limité pour éviter toute ambiguïté impliquant un risque d'artéfacts, ce qui simplifie encore plus les calculs. Les données manquantes résultant de ces limitations de supports sont de toute façon compensées par la combinaison des M images spectrales $FTI_m$ qui réunit tous leurs supports.

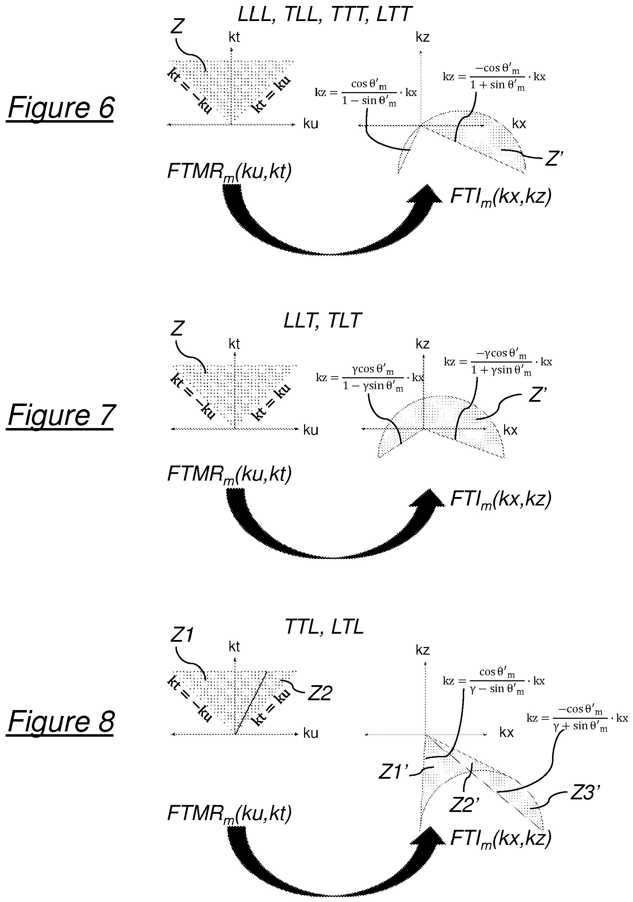

Trois exemples dont donnés à titre purement illustratif dans les figures 6, 7 et 8 dans le deuxième cas précité et illustré par la figure 4 d'une seule réflexion contre le fond de l'objet 102 avec ou sans changements de modes de propagation des ondes émises.

La figure 6 illustre l'effet du système d'équations de changement de repère sur les supports d'une matrice spectrale $FTMR_m$ et de sa conversion en image spectrale $FTI_m$, lorsqu'aucun changement de mode de propagation n'a lieu lors de la rétro-diffusion des ondes ($\gamma=1$). Cela inclut donc les modes notés LLL (pour $M_1=L, M_2=L, M_3=L$), TLL (pour $M_1=T, M_2=L, M_3=L$), TTT (pour $M_1=T, M_2=T, M_3=T$) et LTT (pour $M_1=L, M_2=T, M_3=T$). Selon une première limitation par fenêtrage de support spectral, seules les valeurs de kt supérieures ou égales à la valeur absolue de ku, pour chaque ku, sont retenues, ce qui forme un support Z triangulaire ouvert vers le haut pour la matrice spectrale $FTMR_m$. Il peut en effet être considéré qu'en dehors de ce support Z les ondes sont évanescentes (i.e. elles ne se propagent pas) et donc non significatives. Compte tenu de la forme que prend le système d'équations de changement de repère pour $\gamma=1$ dans ce deuxième cas, il en résulte un support Z' en portion de disque limitée par un secteur angulaire (i.e un fenêtrage spectral) dépendant de la condition kt ≥ Ikul pour l'image spectrale $FTI_m$. Ce système d'équations de changement de repère est bijectif de sorte qu'il n'est pas particulièrement approprié de limiter davantage le support Z (et par conséquent le support Z').

La figure 7 illustre l'effet du système d'équations de changement de repère sur les supports d'une matrice spectrale $FTMR_m$ et de sa conversion en image spectrale $FTI_m$, lorsqu'un changement de mode de propagation de L vers T a lieu lors de la rétro-diffusion des ondes ($\gamma<1$). Cela inclut donc les modes notés LLT (pour $M_1=L, M_2=L, M_3=T$) et TLT (pour $M_1=T, M_2=L, M_3=T$). Comme précédemment, selon une première limitation de support spectral, seules les valeurs de kt supérieures ou égales à la valeur absolue de ku, pour chaque ku, sont retenues, ce qui forme un support Z triangulaire ouvert vers le haut pour la matrice spectrale $FTMR_m$. Compte tenu de la forme que prend le système d'équations de changement de repère pour $\gamma<1$ dans ce deuxième cas, il en résulte un support Z' en portion de disque limitée par un secteur angulaire dépendant de la condition kt ≥ |ku| pour l'image spectrale $FTI_m$. Ce système d'équations de changement de repère est toujours bijectif de sorte qu'il n'est pas particulièrement approprié de limiter davantage le support Z (et par conséquent le support Z').

La figure 8 illustre l'effet du système d'équations de changement de repère sur les supports d'une matrice

spectrale $FTMR_m$ et de sa conversion en image spectrale $FTI_m$, lorsqu'un changement de mode de propagation de T vers L a lieu lors de la rétro-diffusion des ondes ($\gamma>1$). Cela inclut donc les modes notés LTL (pour $M_1=L$, $M_2=T$, $M_3=L$) et TTL (pour $M_1=T$, $M_2=T$, $M_3=L$). Comme précédemment, selon une première limitation de support spectral, seules les valeurs de kt supérieures ou égales à la valeur absolue de ku, pour chaque ku, sont retenues, ce qui forme un support Z triangulaire ouvert vers le haut pour la matrice spectrale $FTMR_m$. Compte tenu de la forme que prend le système d'équations de changement de repère pour $\gamma>1$ dans ce deuxième cas, il en résulte un support Z' de forme plus complexe que les précédents, dans lequel on repère une zone Z2' de recouvrement. Plus précisément, le support Z peut être scindé en deux zones Z1 et Z2, Z1 se projetant sur deux zones Z1' et Z2' du support Z' par changement de repère, tandis que Z2 se projette sur deux zones Z2' et Z3' du support Z'. Cela signifie que dans la zone Z2', chaque couple (kx, kz) présente deux antécédents respectivement dans les zones Z1 et Z2. Il en résulte que pour $\gamma>1$ le système d'équations de changement de repère n'est pas bijectif car pas injectif, de sorte qu'il devient approprié de limiter davantage le support Z (et par conséquent le support Z'). On peut par exemple ne conserver que la zone Z2 de support pour la matrice spectrale $FTMR_m$, c'est-à-dire ne conserver que l'union des zones Z2' et Z3' de support pour l'image spectrale $FTI_m$. Cela constitue un fenêtrage spectral nettement plus sélectif. Mais la perte d'information n'est pas significative compte tenu de la combinaison ultérieure des M images spectrales $FTI_m$. En revanche, comme déjà souligné, le gain en mémoire et calculs est important, de même qu'en limitation des artéfacts.

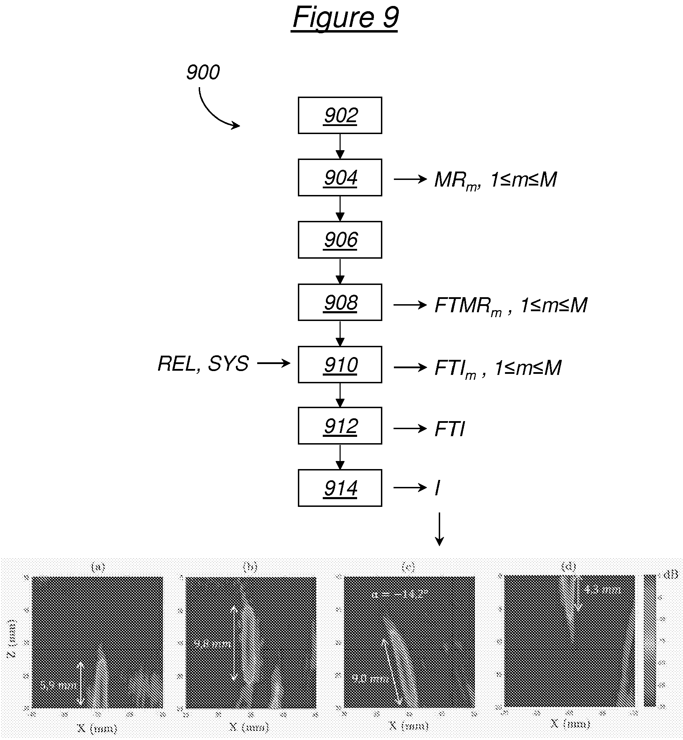

En référence à la figure 9, un exemple de procédé 900 d'acquisition et de traitement de signaux ultrasonores que peut mettre en oeuvre le dispositif 100 de la figure 1 va à présent être décrit selon un mode de réalisation préféré de l'invention.

Au cours d'une étape 902, l'unité de traitement 114 exécutant les instructions 120 commande les séquences d'émissions et de réceptions des transducteurs $108_1$, ..., $108_N$ pour l'acquisition des signaux de mesure.

Ces séquences sont au nombre de M, nombre entier pouvant être très inférieur au nombre N de transducteurs $108_1$, ..., $108_N$. Après chaque tir, les signaux sont reçus sur l'ensemble des N transducteurs, numérisés et transmis au circuit électronique 112.

Au cours d'une étape 904, l'unité de traitement 114 exécutant les instructions 124 enregistre les signaux de mesure, ceux-ci étant échantillonnés, numérisés et répartis dans les M matrices $MR_m$, $1 \leq m \leq M$, pour permettre leur traitement ultérieur. Les étapes 902 et 904 peuvent être exécutées simultanément, c'est-à-dire qu'il n'est pas nécessaire d'attendre que tous les tirs soient réalisés pour commencer à enregistrer les signaux de mesure et effectuer un traitement tel qu'une reconstitution d'image.

Au cours d'une étape 906 optionnelle, l'unité de traitement 114 exécutant les instructions 126 effectue un filtrage temporel de chaque matrice $MR_m$, ce filtrage visant à supprimer toute information se trouvant à des temps de vol exclus de la zone d'intérêt. Cette étape 906 permet de limiter la zone à imager à un voisinage proche des défauts en excluant notamment les interfaces échogènes perturbatrices. Elle trouve tout son intérêt dans l'imagerie de fissures se formant depuis le fond de l'objet.

Au cours d'une étape 908, l'unité de traitement 114 exécutant les instructions 128 effectue une transformée de Fourier bidimensionnelle discrète en lignes et colonnes de chaque matrice $MR_m$ pour obtenir les M matrices spectrales $FTMR_m$.

Au cours d'une étape 910, l'unité de traitement 114 exécutant les instructions 130 convertit chaque matrice $FTMR_m$ pour obtenir les M images spectrales $FTI_m$ à l'aide d'une relation REL de transformation matricielle et d'un système SYS d'équations de changement de repère, choisis selon la prise en compte de réflexion(s) et/ou changement(s) de mode(s) souhaitée.

Au cours d'une étape 912, l'unité de traitement 114 exécutant les instructions 132 réalise la combinaison des M images spectrales $FTI_m$ en une seule image spectrale résultante FTI.

Enfin, au cours d'une dernière étape 914, l'unité de traitement 114 exécutant les instructions 134 effectue une transformée de Fourier bidimensionnelle discrète inverse en lignes et colonnes de l'image spectrale résultante FTI pour obtenir l'image ultrasonore I de visualisation de l'objet 102.

Un exemple (a) d'image ultrasonore I, dans laquelle un défaut de longueur 5,9 mm en fond d'objet est visible, est donné pour une imagerie TTT à émission en mode T avec prise en compte d'un rebond au fond de l'objet 102 sans changement de mode.

Un exemple (b) d'image ultrasonore I, dans laquelle un défaut de longueur 9,8 mm dans l'objet est visible, est donné pour une imagerie LLT à émission en mode L avec prise en compte d'un rebond au fond de l'objet 102 et d'un changement de mode L vers T lors de la rétro-diffusion.

Un exemple (c) d'image ultrasonore I, dans laquelle un défaut de longueur 9,0 mm et d'inclinaison à -14,2° en fond d'objet est visible, est donné pour une imagerie TTL à émission en mode T avec prise en compte d'un rebond au fond de l'objet 102 et d'un changement de mode T vers L lors de la rétro-diffusion.

Enfin, un exemple (d) d'image ultrasonore I, dans laquelle un défaut de longueur 4,3 mm en face avant de l'objet est visible, est donné pour une imagerie TTTTT à émission en mode T avec prise en compte de deux rebonds au fond et en face avant de l'objet 102 sans changement de mode. Dans chacun de ces exemples, les défauts, qui sont d'un type généralement difficile à détecter et visualiser, sont ici très clairement visibles, localisés et mesurables.

Il apparaît clairement qu'un dispositif de sondage à ultrasons tel que celui décrit précédemment permet de visualiser des défauts complexes et habituellement peu visibles en prenant astucieusement en compte des réflexions et changements de modes de propagation possibles d'ondes émises en imagerie ultrasonore par transformée de Fourier bidimensionnelle. Cette prise en compte astucieuse n'ajoute pas de complexité aux traitements réalisés. Une limitation de support spectral peut en outre être envisagée, simplifiant encore davantage les calculs.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

En particulier, les instructions de programme d'ordinateur pourraient être remplacées par des circuits électroniques dédiés aux fonctions réalisées lors de l'exécution de ces instructions.

En particulier également, seuls des exemples d'imagerie ultrasonore où les transducteurs d'émission/réception sont au contact de l'objet à sonder ont été envisagés dans les figures 3 à 9. Mais comme le montre la figure 1, la sonde 104 peut être à distance de l'objet 102, par exemple immergée dans un liquide pour la bonne transmission des ondes ultrasonores. Mais les principes généraux de la présente invention restent valables, seules les équations devant être adaptées par ajout de termes de phases pour une prise en compte des transmissions d'ondes, à l'émission et à la réception, dans le milieu liquide considéré entre la sonde et la face avant de l'objet. Cette adaptation est particulièrement simple et à la portée de l'homme du métier.

D'une façon générale, dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué, l'étendue de la protection couvrant la portée des revendications.

**Revendications**

1. Procédé d'imagerie (900) par transformée de Fourier bidimensionnelle d'une acquisition (S) par sondage ultrasonore d'un objet (102), comportant les étapes suivantes :

   - commande (902) de L transducteurs d'émission ($108_1$, ..., $108_N$) pour M émissions successives d'ondes ultrasonores,
   - commande (902) de N transducteurs de réception ($108_1$, ..., $108_N$) de manière à recevoir simultanément et pendant une durée prédéterminée, pour chaque émission, N signaux temporels de mesure, mesurant en particulier des échos dus à des rétro-diffusions de l'émission considérée dans l'objet (102),
   - échantillonnage temporel (904) de chaque signal temporel de mesure en $N_t$ échantillons successifs,
   - obtention (904) de M matrices $MR_m$, $1 \leq m \leq M$, de signaux temporels ultrasonores de taille $NxN_t$, chaque coefficient $MR_m(u_i, t_j)$ de chaque matrice $MR_m$ représentant le $t_j$-ième échantillon temporel du signal de mesure reçu par le $u_i$-ième transducteur de réception dû à la m-ième émission,
   - transformation de Fourier bidimensionnelle (908) en lignes et colonnes de chaque matrice $MR_m$ pour l'obtention de M matrices spectrales $FTMR_m$, $1 \leq m \leq M$,
   - conversion (910) de chaque matrice spectrale $FTMR_m$ pour l'obtention de M images spectrales $FTI_m$ dans un espace de fréquences spatiales, cette conversion comportant l'application d'une relation (REL) de transformation matricielle des M matrices $FTMR_m$ en les M images spectrales $FTI_m$ et l'application d'une interpolation bilinéaire à l'aide d'un système (SYS) d'équations de changement de repère,
   - combinaison (912) des M images spectrales $FTI_m$ et transformation de Fourier bidimensionnelle inverse (914) en lignes et colonnes de l'image spectrale résultante FTI pour l'obtention d'une image ultrasonore I de visualisation de l'objet,

   **caractérisé en ce que** la conversion (910) comporte :

   - la prise en compte d'un changement de mode de propagation ($M_1$, $M_2$, $M_3$, $M_4$, $M_5$) lors d'une rétro-diffusion dans l'objet sondé (102), par ajout d'un paramètre caractérisant ce changement de mode dans les équations (SYS) de changement de repère, et/ou
   - la prise en compte d'une réflexion contre une paroi de l'objet sondé (102), par ajout d'un terme de déphasage dans la relation (REL) de transformation matricielle.

2. Procédé d'imagerie (900) selon la revendication 1, dans lequel les L transducteurs d'émission ($108_1$, ..., $108_N$) sont

commandés pour M émissions successives d'ondes ultrasonores planes d'angles d'émission successifs $\theta_m$ différents dans M zones d'émission.

3.  Procédé d'imagerie (900) selon la revendication 2, dans lequel, lors de la conversion (910) de chaque matrice spectrale FTMR$_m$ en chaque image spectrale FTI$_m$, les équations (SYS) de changement de repère prennent la forme suivante :

$$\begin{cases} kx = ku + \gamma \cdot kt \cdot \sin\theta'_m \\ kz = \pm\sqrt{kt^2 - ku^2} \pm \gamma \cdot kt \cdot \cos\theta'_m \end{cases},$$

où ku et kt sont les nombres d'ondes, respectivement spatial et temporel, représentatifs des lignes et colonnes de chaque matrice spectrale FTMR$_m$, kx et kz sont les fréquences spatiales représentatives des lignes et colonnes de chaque image spectrale FTI$_m$, $\pm$ représente une addition ou une soustraction, $\gamma$ est le paramètre caractérisant le changement de mode de propagation lors d'une rétro-diffusion dans l'objet sondé et $\theta'_m$ est un angle incident lors de la rétro-diffusion déterminable à partir de $\theta_m$ à l'aide de la loi de Snell-Descartes.

4.  Procédé d'imagerie (900) selon la revendication 3, dans lequel le paramètre $\gamma$ est défini en tant que ratio entre la vitesse de propagation de toute onde émise selon son mode de propagation après sa rétro-diffusion dans l'objet sondé (102) et la vitesse de propagation de cette même onde selon son mode de propagation avant sa rétro-diffusion dans l'objet sondé.

5.  Procédé d'imagerie (900) selon l'une quelconque des revendications 2 à 4, dans lequel, lors de la conversion (910) de chaque matrice spectrale FTMR$_m$ en chaque image spectrale FTI$_m$, la relation (REL) de transformation matricielle prend la forme suivante :

$$FTI_m(kx, kz) = \sqrt{kt^2 - ku^2} \cdot e^{j\varphi(ku, kt, \theta_m)} \cdot FTMR_m(ku, kt),$$

où ku et kt sont les nombres d'ondes, respectivement spatial et temporel, représentatifs des lignes et colonnes de chaque matrice spectrale FTMR$_m$, kx et kz sont les fréquences spatiales représentatives des lignes et colonnes de chaque image spectrale FTI$_m$, e est la fonction exponentielle, j est le nombre imaginaire pur tel que $j^2 = -1$ et $\varphi$ est une fonction de déphasage dépendant de ku, kt et $\theta_m$.

6.  Procédé d'imagerie (900) selon les revendications 3 et 5, ne prenant en compte aucune réflexion contre une paroi de l'objet (102), dans lequel :

    -

$$\varphi(ku, kt, \theta_m) = 0,$$

    -

$$\begin{cases} kx = ku + \gamma \cdot kt \cdot \sin\theta_m \\ kz = \sqrt{kt^2 - ku^2} + \gamma \cdot kt \cdot \cos\theta_m \end{cases},$$

7.  Procédé d'imagerie (900) selon les revendications 3 et 5, prenant en compte une réflexion contre un fond de l'objet (102) situé à une distance H d'une face avant de l'objet recevant les ondes émises par les transducteurs d'émission, dans lequel :

    -

$$\varphi(ku, kt, \theta_m) = H \cdot (\gamma_r \cdot \gamma \cdot kt \cdot \cos\theta_m + \gamma \cdot kt \cdot \cos\theta'_m),$$

    -

$$\begin{cases} kx = ku + \gamma \cdot kt \cdot \sin \theta'_m \\ kz = \sqrt{kt^2 - ku^2} - \gamma \cdot kt \cdot \cos \theta'_m \end{cases}$$

où $\gamma_r$ est un paramètre caractérisant un éventuel changement de mode de propagation lors de la réflexion contre le fond de l'objet sondé, notamment défini en tant que ratio entre la vitesse de propagation de toute onde émise selon son mode de propagation après sa réflexion et la vitesse de propagation de cette même onde selon son mode de propagation avant sa réflexion.

8.  Procédé d'imagerie (900) selon les revendications 3 et 5, prenant en compte une première réflexion contre un fond de l'objet (102) situé à une distance H d'une face avant de l'objet recevant les ondes émises par les transducteurs d'émission, une deuxième réflexion contre la face avant de l'objet et une troisième réflexion contre le fond de l'objet, dans lequel :

    -

$$\varphi(ku, kt, \theta_m) = H \cdot \left( \gamma_{r1} \cdot \gamma_{r2} \cdot \gamma \cdot kt \cdot \cos \theta_m + \gamma_{r2} \cdot \gamma \cdot kt \cdot \cos \theta''_m + \sqrt{kt^2 - ku^2} + \sqrt{(kt/\gamma_{r4})^2 - ku^2} \right),$$

    -

$$\begin{cases} kx = ku + \gamma \cdot kt \cdot \sin \theta'_m \\ kz = -\sqrt{kt^2 - ku^2} + \gamma \cdot kt \cdot \cos \theta'_m \end{cases}$$

où $\gamma_{r1}$ est un paramètre caractérisant un éventuel changement de mode de propagation lors de la première réflexion contre le fond de l'objet sondé, notamment défini en tant que ratio entre la vitesse de propagation de toute onde émise selon son mode de propagation après sa première réflexion et la vitesse de propagation de cette même onde selon son mode de propagation avant sa première réflexion, $\gamma_{r2}$ est un paramètre caractérisant un éventuel changement de mode de propagation lors de la deuxième réflexion contre la face avant de l'objet sondé, notamment défini en tant que ratio entre la vitesse de propagation de toute onde émise selon son mode de propagation après sa deuxième réflexion et la vitesse de propagation de cette même onde selon son mode de propagation avant sa deuxième réflexion, $\gamma_{r4}$ est un paramètre caractérisant un éventuel changement de mode de propagation lors de la troisième réflexion contre le fond de l'objet sondé, notamment défini en tant que ratio entre la vitesse de propagation de toute onde émise selon son mode de propagation après sa troisième réflexion et la vitesse de propagation de cette même onde selon son mode de propagation avant sa troisième réflexion, et $\theta''_m$ est un angle réfléchi lors de la première réflexion contre le fond de l'objet déterminable à partir de $\theta_m$ à l'aide de la loi de Snell-Descartes.

9.  Procédé d'imagerie (900) selon l'une quelconque des revendications 1 à 8, dans lequel la conversion (910) de chaque matrice spectrale $FTMR_m$ pour l'obtention des M images spectrales $FTI_m$ comporte une limitation de support d'un espace spectral de chaque matrice spectrale $FTMR_m$ pour ne conserver que les ondes qui se propagent et pour supprimer toute ambiguïté de correspondance entre l'espace spectral de chaque matrice spectrale $FTMR_m$ et celui de l'image spectrale $FTI_m$ correspondante lorsque le système (SYS) d'équations de changement de repère n'est pas bijectif.

10. Dispositif (100) de sondage à ultrasons, pour le sondage ultrasonore d'un objet (102), comportant

    - une sonde (104) comprenant L transducteurs d'émission à ultrasons et N transducteurs de réception à ultrasons ($108_1, ..., 108_N$),
    - des moyens (114, 120) de commande des L transducteurs d'émission pour M émissions successives d'ondes ultrasonores,
    - des moyens (114, 120) de commande des N transducteurs de réception de manière à recevoir simultanément et pendant une durée prédéterminée, pour chaque émission, N signaux temporels de mesure, mesurant en particulier des échos dus à des rétro-diffusions de l'émission considérée, et

- un processeur (114, 124, 126, 128, 130, 132,134) de reconstitution d'une image ultrasonore (I) de visualisation de l'objet (102), configuré pour effectuer les traitements suivants :

• échantillonnage temporel de chaque signal temporel de mesure en $N_t$ échantillons successifs,
• obtention de M matrices $MR_m$, $1 \leq m \leq M$, de signaux temporels ultrasonores de taille $NxN_t$, chaque coefficient $MR_m(u_i,t_j)$ de chaque matrice $MR_m$ représentant le $t_j$-ième échantillon temporel du signal de mesure reçu par le $u_i$-ième transducteur de réception dû à la m-ième émission,
• transformation de Fourier bidimensionnelle en lignes et colonnes de chaque matrice $MR_m$ pour l'obtention de M matrices spectrales $FTMR_m$, $1 \leq m \leq M$,
• conversion de chaque matrice spectrale $FTMR_m$ pour l'obtention de M images spectrales $FTI_m$ dans un espace de fréquences spatiales, cette conversion comportant l'application d'une relation (REL) de transformation matricielle des M matrices $FTMR_m$ en les M images spectrales $FTI_m$ et l'application d'une interpolation bilinéaire à l'aide d'un système (SYS) d'équations de changement de repère,
• combinaison des M images spectrales $FTI_m$ et transformation de Fourier bidimensionnelle inverse en lignes et colonnes de l'image spectrale résultante FTI pour l'obtention d'une image ultrasonore I de visualisation de l'objet,

**caractérisé en ce que** le processeur est en outre configuré pour :

- prendre en compte un changement de mode de propagation lors d'une rétro-diffusion dans l'objet sondé, par ajout d'un paramètre caractérisant ce changement de mode dans les équations (SYS) de changement de repère, et/ou
- prendre en compte une réflexion contre une paroi de l'objet sondé, par ajout d'un terme de déphasage dans la relation (REL) de transformation matricielle , lorsqu'il effectue la conversion.

11. Programme d'ordinateur (118) téléchargeable depuis un réseau de communication et/ ou enregistré sur un support lisible par ordinateur et/ou exécutable par un processeur (114), **caractérisé en ce qu'**il comprend des instructions qui conduisent le dispositif selon la revendication 10 à exécuter les étapes d'un procédé d'imagerie (900) selon l'une quelconque des revendications 1 à 9, lorsque ledit programme est exécuté sur un ordinateur (112).

## Patentansprüche

1. Bildgebungsverfahren (900) mittels zweidimensionaler Fourier-Transformation einer Aufnahme (S) durch Ultraschall-Sondierung eines Gegenstands (102), die folgenden Schritte beinhaltend:

- Steuern (902) von L Sendemesswandlern ($108_1$, ..., $108_N$) für M aufeinanderfolgende Ultraschallwellensendungen,
- Steuern (902) von N Empfangsmesswandlern ($108_1$, ..., $108_N$), um gleichzeitig und während einer vorbestimmten Dauer für jede Sendung N Messzeitsignale zu empfangen, die insbesondere Echos aufgrund von Rückstreuungen der betrachteten Sendung im Gegenstand (102) messen,
- Zeitabtasten (904) eines jeden Messzeitsignals in $N_t$ aufeinanderfolgenden Abtastungen,
- Erhalten (904) von M Matrizen $MR_m$, $1 \leq m \leq M$, von Ultraschall-Zeitsignalen der Größe $NxN_t$, wobei jeder Koeffizient $MR_m(u_i, t_j)$ einer jeden Matrix $MR_m$ die $t_j$-te Zeitabtastung des von dem $u_i$-ten Empfangsmesswandler aufgrund der m-ten Sendung empfangenen Messsignals darstellt,
- zweidimensionale Fourier-Transformation (908) in Zeilen und Spalten einer jeden Matrix $MR_m$ zum Erhalten von M spektralen Matrizen $FTMR_m$, $1 \leq m \leq M$,
- Umwandeln (910) einer jeden spektralen Matrix $FTMR_m$ zum Erhalten von M spektralen Bildern $FTI_m$ in einem Raum mit räumlichen Frequenzen, wobei diese Umwandlung die Anwendung einer Matrixumwandlungsbeziehung (REL) der M Matrizen $FTMR_m$ in die M spektralen Bilder $FTI_m$ und die Anwendung einer bilinearen Interpolation mithilfe eines Systems (SYS) an Gleichungen mit Bezugspunktänderung beinhaltet,
- Kombination (912) der M spektralen Bilder $FTI_m$ und zweidimensionale inverse Fourier-Transformation (914) in Zeilen und Spalten des resultierenden spektralen Bildes FTI zum Erhalten eines Ultraschallbildes I zur Visualisierung des Gegenstands,

**dadurch gekennzeichnet, dass** das Umwandeln (910) beinhaltet:

- die Berücksichtigung einer Änderung eines Ausbreitungsmodus ($M_1$, $M_2$, $M_3$, $M_4$, $M_5$) bei einer Rückstreuung

im sondierten Gegenstand (102) durch Hinzufügen eines Parameters, der diese Modus-Änderung kennzeichnet, in der Gleichungen (SYS) mit Bezugspunktänderung, und/oder
- Berücksichtigen einer Reflexion gegen eine Wand des sondierten Gegenstandes (102), durch Hinzufügen eines Phasenverschiebungsterms in der Matrixumwandlungsbeziehung (REL).

2. Bildgebungsverfahren (900) nach Anspruch 1, wobei die L Sendemesswandler ($108_1$, ..., $108_N$) für M aufeinanderfolgende Sendungen von ebenen Ultraschallwellen mit unterschiedlichen aufeinanderfolgenden Sendewinkeln $\theta_m$ in M Sendebereichen gesteuert werden.

3. Bildgebungsverfahren (900) nach Anspruch 2, wobei beim Umwandeln (910) einer jeden spektralen Matrix $FTMR_m$ in jedes spektrale Bild $FTI_m$ die Gleichungen (SYS) mit Bezugspunktänderung die folgende Form annehmen:

$$\begin{cases} kx = ku + \gamma * kt * \sin\theta'\text{m} \\ kz = \pm\sqrt{kt^2 - ku^2} \pm \gamma * kt * \cos\theta'\text{m}' \end{cases}$$

wobei ku und kt die jeweils räumlichen und zeitlichen Wellenzahlen sind, die repräsentativ für die Zeilen und Spalten einer jeden spektralen Matrix $FTMR_m$ sind, kx und kz die räumlichen Frequenzen sind, die repräsentativ für die Zeilen und Spalten eines jeden spektralen Bildes $FTI_m$ sind, $\pm$ eine Addition oder eine Subtraktion darstellt, $\gamma$ der Parameter ist, der die Änderung des Ausbreitungsmodus bei einer Rückstreuung im sondierten Gegenstand kennzeichnet, $\theta$m ein Einfallswinkel bei der Rückstreuung ist, der aus $\theta_m$ mithilfe des Snell-Descartes-Gesetzes bestimmbar ist.

4. Bildgebungsverfahren (900) nach Anspruch 3, wobei der Parameter $\gamma$ als Verhältnis zwischen der Ausbreitungsgeschwindigkeit einer jeden gesendeten Welle entsprechend ihrem Ausbreitungsmodus nach ihrer Rückstreuung in dem sondierten Gegenstand (102) und der Ausbreitungsgeschwindigkeit dieser selben Welle entsprechend ihrem Ausbreitungsmodus vor ihrer Rückstreuung in dem sondierten Gegenstand definiert wird.

5. Bildgebungsverfahren (900) nach einem der Ansprüche 2 bis 4, wobei beim Umwandeln (910) einer jeden spektralen Matrize $FTMR_m$ in jedes spektrale Bild $FTI_m$ die Matrixumwandlungsbeziehung (REL) die folgende Form annimmt:

$$\text{FTI}_\text{m}(kx,kz) = \sqrt{kt^2 - ku^2} * e^{j\varphi(ku,kt,\theta\text{m})} * \text{FTMR}_\text{m}(ku,kt),$$

wobei ku und kt die jeweils räumlichen und zeitlichen Wellenzahlen sind, die repräsentativ für die Zeilen und Spalten einer jeden spektralen Matrix $FTMR_m$ sind, kx und kz die räumlichen Frequenzen sind, die repräsentativ für die Zeilen und Spalten eines jeden spektralen Bildes $FTI_m$ sind, e die Exponentialfunktion ist, j die reine imaginäre Zahl ist, sodass $j^2 = -1$ ist, und $\varphi$ eine von ku, kt und $\theta_m$ abhängige Phasenverschiebungsfunktion ist.

6. Bildgebungsverfahren (900) nach den Ansprüchen 3 und 5, das keine Reflexion gegen eine Wand des Gegenstandes (102) berücksichtigt, wobei:

-

$$- \varphi(ku,kt,\theta\text{m}) = 0,$$

-

$$\begin{cases} kx = ku + \gamma * kt * \sin\theta\text{m} \\ kz = \sqrt{kt^2 - ku^2} + \gamma * kt * \cos\theta\text{m} \end{cases}$$

7. Bildgebungsverfahren (900) nach den Ansprüchen 3 und 5, das eine Reflexion gegen einen Hintergrund des Gegenstandes (102) berücksichtigt, der sich in einem Abstand H von einer Vorderseite des Gegenstandes befindet, der die Wellen empfängt, die von den Sendemesswandlern gesendet werden, wobei:

$$\varphi(ku, kt, \theta m) = \text{H*} \left( \gamma_r * \gamma * kt * \cos \theta_m + \gamma * kt * \cos \theta'm \right),$$

$$\begin{cases} kx = ku + \gamma * kt * \sin \theta'm \\ kz = \sqrt{kt^2 - ku^2} - \gamma * kt * \cos \theta'm \end{cases}$$

wobei $\gamma_r$ ein Parameter ist, der eine eventuelle Änderung des Ausbreitungsmodus bei der Reflexion gegen den Hintergrund des sondierten Gegenstands kennzeichnet, der insbesondere als das Verhältnis zwischen der Ausbreitungsgeschwindigkeit einer jeden gesendeten Welle entsprechend ihrem Ausbreitungsmodus nach ihrer Reflexion und der Ausbreitungsgeschwindigkeit dieser selben Welle entsprechend ihrem Ausbreitungsmodus vor ihrer Reflexion definiert wird.

8. Bildgebungsverfahren (900) nach den Ansprüchen 3 und 5, das eine erste Reflexion gegen einen Hintergrund des Gegenstandes (102), der sich in einem Abstand H von einer Vorderseite des Gegenstandes befindet, der die Wellen empfängt, die von den Sendemesswandlern gesendet werden, eine zweite Reflexion gegen die Vorderseite des Gegenstandes und eine dritte Reflexion gegen den Hintergrund des Gegenstandes berücksichtigt, wobei:

$$\varphi(ku, kt, \theta m) = \text{H*} \left( \gamma_{r1} * \gamma_{r2} * \gamma * kt * \cos \theta_m + \gamma_{r2} * \gamma * kt * \right.$$
$$\left. \cos \theta''m + \sqrt{kt^2 - ku^2} + \sqrt{(kt/\gamma_{r4})^2 - ku^2} \right),$$

$$\begin{cases} kx = ku + \gamma * kt * \sin \theta'm \\ kz = -\sqrt{kt^2 - ku^2} + \gamma * kt * \cos \theta'm' \end{cases}$$

wobei $\gamma_{r1}$ ein Parameter ist, der eine eventuelle Änderung des Ausbreitungsmodus bei der ersten Reflexion gegen den Hintergrund des sondierten Gegenstandes kennzeichnet, der insbesondere als das Verhältnis zwischen der Ausbreitungsgeschwindigkeit einer jeden gesendeten Welle entsprechend ihrem Ausbreitungsmodus nach ihrer ersten Reflexion und der Ausbreitungsgeschwindigkeit dieser selben Welle entsprechend ihrem Ausbreitungsmodus vor ihrer ersten Reflexion definiert wird, $\gamma_{r2}$ ein Parameter ist, der eine eventuelle Änderung des Ausbreitungsmodus bei der zweiten Reflexion gegen die Vorderseite des sondierten Gegenstandes kennzeichnet, der insbesondere als das Verhältnis zwischen der Ausbreitungsgeschwindigkeit einer jeden gesendeten Welle entsprechend ihrem Ausbreitungsmodus nach ihrer zweiten Reflexion und der Ausbreitungsgeschwindigkeit dieser selben Welle entsprechend ihrem Ausbreitungsmodus vor ihrer zweiten Reflexion definiert wird, $\gamma_{r4}$ ein Parameter ist, der eine eventuelle Änderung des Ausbreitungsmodus bei der dritten Reflexion gegen den Hintergrund des sondierten Gegenstandes kennzeichnet, insbesondere als das Verhältnis zwischen der Ausbreitungsgeschwindigkeit einer jeden gesendeten Welle entsprechend ihrem Ausbreitungsmodus nach ihrer dritten Reflexion und der Ausbreitungsgeschwindigkeit dieser selben Welle entsprechend ihrem Ausbreitungsmodus vor ihrer dritten Reflexion definiert wird, und $\theta'm$ ein reflektierter Winkel bei der ersten Reflexion gegen den Hintergrund des Gegenstandes ist, der ausgehend von $\theta_m$ mithilfe des Snell-Descartes-Gesetzes bestimmbar ist.

9. Bildgebungsverfahren (900) nach einem der Ansprüche 1 bis 8, wobei das Umwandeln (910) einer jeden spektralen Matrix FTMR$_m$ zum Erhalten der M spektralen Bilder FTI$_m$ eine Support-Begrenzung eines spektralen Raumes einer jeden spektralen Matrix FTMR$_m$ beinhaltet, um nur jene Wellen zu behalten, die sich ausbreiten und um jede Entsprechungsmehrdeutigkeit zwischen dem spektralen Raum einer jeden spektralen Matrix FTMR$_m$ und jenem

des entsprechenden spektralen Bildes $FTI_m$ auszuschließen, wenn das System (SYS) an Gleichungen mit Bezugspunktänderung nicht bijektiv ist.

10. Ultraschallsondierungsvorrichtung (100) zur Ultraschallsondierung eines Gegenstandes (102), beinhaltend

- eine Sonde (104), umfassend L Ultraschall-Sendemesswandler und N Ultraschall-Empfangsmesswandler ($108_1$, ..., $108_N$),
- Mittel (114, 120) zum Steuern der L Sendemesswandler für M aufeinanderfolgende Ultraschallwellensendungen
- Mittel zum Steuern (114, 120) der N Empfangsmesswandler, um gleichzeitig und während einer vorbestimmten Dauer für jede Sendung N Messzeitsignale zu empfangen, die insbesondere Echos aufgrund von Rückstreuungen der betrachteten Sendung messen, und
- einen Prozessor (114, 124, 126, 128, 130, 132, 134) zur Rekonstitution eines Ultraschallbildes (I) zur Visualisierung des Gegenstands (102), der konfiguriert ist, um die folgenden Bearbeitungen durchzuführen:

• Zeitabtasten eines jeden Messzeitsignals in $N_t$ aufeinanderfolgenden Abtastungen,
• Erhalten von M Matrizen $MR_m$, $1 \le m \le M$, von Ultraschall-Zeitsignalen der Größe $NxN_t$, wobei jeder Koeffizient $MR_m(u_i, t_j)$ einer jeden Matrix $MR_m$ die $t_j$-te Zeitabtastung des von dem $u_i$-ten Empfangsmesswandler aufgrund der m-ten Sendung empfangenen Messsignals darstellt,
• zweidimensionale Fourier-Transformation in Zeilen und Spalten einer jeden Matrix $MR_m$ zum Erhalten von M spektralen Matrizen $FTMR_m$, $1 \le m \le M$,
• Umwandeln einer jeden spektralen Matrix $FTMR_m$ zum Erhalten von M spektralen Bildern $FTI_m$ in einem Raum mit räumlichen Frequenzen, wobei diese Umwandlung die Anwendung einer Matrixumwandlungsbeziehung (REL) der M Matrizen $FTMR_m$ in die M spektralen Bilder $FTI_m$ und die Anwendung einer bilinearen Interpolation mithilfe eines Systems (SYS) an Gleichungen mit Bezugspunktänderung beinhaltet,
• Kombination der M spektralen Bilder $FTI_m$ und zweidimensionale inverse Fourier-Transformation in Zeilen und Spalten des resultierenden spektralen Bildes FTI zum Erhalten eines Ultraschallbildes I zur Visualisierung des Gegenstands,

**dadurch gekennzeichnet, dass** der Prozessor weiter konfiguriert ist, um:

- eine Änderung eines Ausbreitungsmodus bei einer Rückstreuung im sondierten Gegenstand durch Hinzufügen eines Parameters, der diese Modus-Änderung kennzeichnet, in den Gleichungen (SYS) mit Bezugspunktänderung zu berücksichtigen, und/oder
- eine Reflexion gegen eine Wand des sondierten Gegenstandes, durch Hinzufügen eines Phasenverschiebungsterms in der Matrixumwandlungsbeziehung (REL) zu berücksichtigen,

wenn er die Umwandlung durchführt.

11. Computerprogramm (118), das aus einem Kommunikationsnetzwerk heruntergeladen werden kann, und/oder auf einem computerlesbaren Support gespeichert ist, und/oder durch einen Prozessor (114) ausführbar ist, **dadurch gekennzeichnet, dass** es Anweisungen umfasst, die die Vorrichtung nach Anspruch 10 veranlassen, die Schritte eines Bildgebungsverfahrens (900) nach einem der Ansprüche 1 bis 9 auszuführen, wenn das Programm auf einem Computer (112) ausgeführt wird.

## Claims

1. An imaging method (900) by two-dimensional Fourier transform of an acquisition (S) by ultrasonic probing of an object (102), comprising the following steps:

- control (902) of L transmission transducers ($108_1$, ..., $108_N$) for M successive transmissions of ultrasonic waves,
- control (902) of N receiving transducers ($108_1$, ..., $108_N$) in such a way as to receive simultaneously and for a predetermined duration, for each transmission, N measurement time signals, measuring in particular echoes due to backscattering of said each transmission in the object (102),
- time sampling (904) of each measurement time signal into $N_t$ successive samples,
- obtaining (904) M matrices $MR_m$, $1 \le m \le M$, of ultrasonic time signals of size $NxN_t$, each coefficient $MR_m(u_i, t_j)$ of each matrix $MR_m$ representing the $t_j$-th time sample of the measurement signal received by the $u_i$-th receiving

transducer due to the m-th transmission,
- row and column two-dimensional Fourier transform (908) of each matrix $MR_m$ to obtain M spectral matrices $FTMR_m$, $1 \leq m \leq M$,
- conversion (910) of each spectral matrix $FTMR_m$ to obtain M spectral images $FTI_m$ in a space of spatial frequencies, this conversion comprising the application of a relation (REL) for matrix transformation of the M matrices $FTMR_m$ into the M spectral images $FTI_m$ and the application of a bilinear interpolation using a system (SYS) of reference frame change equations,
- combination (912) of the M spectral images $FTI_m$ and two-dimensional inverse Fourier transformation (914) in rows and columns of the resulting spectral image FTI to obtain an ultrasound image I for visualization of the object,

**characterized in that** the conversion (910) comprises:

- taking into account a change of propagation mode ($M_1$, $M_2$, $M_3$, $M_4$, $M_5$) during a backscattering in the probed object (102), by adding a parameter characterizing this change of mode in the equations (SYS) of change of reference frame, and/or
- taking into account a reflection against a wall of the probed object (102), by adding a phase shift term in the relation (REL) of matrix transformation.

2. The imaging method (900) according to claim 1, wherein the L transmitting transducers ($108_1$, ..., $108_N$) are controlled for M successive transmissions of plane ultrasound waves with different successive transmission angles $\theta_m$ in M transmission zones.

3. The imaging method (900) according to claim 2, wherein upon conversion (910) of each spectral matrix $FTMR_m$ to each spectral image $FTI_m$, the reference frame change equations (SYS) take the following form:

$$\begin{cases} kx = ku + \gamma \cdot kt \cdot \sin \theta'_m \\ kz = \pm\sqrt{kt^2 - ku^2} \pm \gamma \cdot kt \cdot \cos \theta'_m \end{cases},$$

where ku and kt are the wavenumbers, spatial and temporal respectively, representative of the rows and columns of each spectral matrix $FTMR_m$, kx and kz are the spatial frequencies representative of the rows and columns of each spectral image $FTI_m$, $\pm$ represents an addition or subtraction, $\gamma$ is the parameter characterizing the change in propagation mode upon backscattering in the probed object, and $\theta'_m$ is an incident angle upon backscattering determinable from $\theta_m$ using the Snell-Descartes law.

4. The imaging method (900) according to claim 3, wherein the parameter $\gamma$ is defined as the ratio of the propagation velocity of any wave transmitted according to its propagation mode after backscattering in the probed object (102) to the propagation velocity of the same wave according to its propagation mode before backscattering in the probed object.

5. The imaging method (900) according to any one of claims 2 to 4, wherein upon conversion (910) of each spectral matrix $FTMR_m$ to each spectral image $FTI_m$, the matrix transformation relationship (REL) takes the following form:

$$FTI_m(kx, kz) = \sqrt{kt^2 - ku^2} \cdot e^{j\varphi(ku,kt,\theta_m)} \cdot FTMR_m(ku, kt),$$

where ku and kt are the spatial and temporal wavenumbers, respectively, representative of the rows and columns of each spectral matrix $FTMR_m$, kx and kz are the spatial frequencies representative of the rows and columns of each spectral image $FTI_m$, e is the exponential function, j is the pure imaginary number such that $j^2 = -1$ and $\varphi$ is a phase shift function depending on ku, kt and $\theta_m$.

6. The imaging method (900) according to claims 3 and 5, not taking into account any reflection against a wall of the object (102), wherein:

-

$$\varphi(\mathrm{ku}, \mathrm{kt}, \theta_m) = 0,$$

$$\begin{cases} \mathrm{kx} = \mathrm{ku} + \gamma \cdot \mathrm{kt} \cdot \sin\theta_m \\ \mathrm{kz} = \sqrt{\mathrm{kt}^2 - \mathrm{ku}^2} + \gamma \cdot \mathrm{kt} \cdot \cos\theta_m \end{cases}.$$

7. The imaging method (900) according to claims 3 and 5, taking into account a reflection against a bottom of the object (102) located at a distance H from a front face of the object receiving the waves transmitted by the transmission transducers, wherein:

$$\varphi(\mathrm{ku}, \mathrm{kt}, \theta_m) = H \cdot (\gamma_r \cdot \gamma \cdot \mathrm{kt} \cdot \cos\theta_m + \gamma \cdot \mathrm{kt} \cdot \cos\theta'_m),$$

$$\begin{cases} \mathrm{kx} = \mathrm{ku} + \gamma \cdot \mathrm{kt} \cdot \sin\theta'_m \\ \mathrm{kz} = \sqrt{\mathrm{kt}^2 - \mathrm{ku}^2} - \gamma \cdot \mathrm{kt} \cdot \cos\theta'_m \end{cases},$$

where $\gamma_r$ is a parameter characterizing a possible change of propagation mode during the reflection against the bottom of the probed object, in particular defined as the ratio between the propagation velocity of any wave transmitted according to its propagation mode after its reflection and the propagation velocity of this same wave according to its propagation mode before its reflection.

8. The imaging method (900) according to claims 3 and 5, taking into account a first reflection against a bottom of the object (102) located at a distance H from a front face of the object receiving the waves transmitted by the transmission transducers, a second reflection against the front face of the object and a third reflection against the bottom of the object, wherein:

$$\varphi(\mathrm{ku}, \mathrm{kt}, \theta_m) = H \cdot \left(\gamma_{r1} \cdot \gamma_{r2} \cdot \gamma \cdot \mathrm{kt} \cdot \cos\theta_m + \gamma_{r2} \cdot \gamma \cdot \mathrm{kt} \cdot \cos\theta''_m + \right.$$
$$\left. \sqrt{\mathrm{kt}^2 - \mathrm{ku}^2} + \sqrt{(\mathrm{kt}/\gamma_{r4})^2 - \mathrm{ku}^2}\right),$$

$$\begin{cases} \mathrm{kx} = \mathrm{ku} + \gamma \cdot \mathrm{kt} \cdot \sin\theta'_m \\ \mathrm{kz} = -\sqrt{\mathrm{kt}^2 - \mathrm{ku}^2} + \gamma \cdot \mathrm{kt} \cdot \cos\theta'_m \end{cases},$$

where $\gamma_{r1}$ is a parameter characterizing a possible change of propagation mode during the first reflection against the bottom of the probed object, in particular defined as a ratio between the propagation velocity of any wave transmitted according to its propagation mode after its first reflection and the propagation velocity of this same wave according to its propagation mode before its first reflection, $\gamma_{r2}$ is a parameter characterizing a possible change of propagation mode during the second reflection against the front face of the probed object, in particular defined as the ratio between the propagation velocity of any wave transmitted according to its propagation mode after its second reflection and the propagation velocity of this same wave according to its propagation mode before its second reflection, $\gamma_{r4}$ is a parameter characterizing a possible change of propagation mode during the third reflection against the bottom of the probed object, in particular defined as a ratio between the propagation velocity of any wave transmitted according to its propagation mode after its third reflection and the propagation velocity of this same wave according to its propagation mode before its third reflection, and $\theta''_m$ is a reflected angle during the first reflection against the bottom of the object determinable from $\theta_m$ using the Snell-Descartes law.

9. The imaging method (900) according to any one of claims 1 to 8, wherein the conversion (900) of each spectral matrix $FTMR_m$ to obtain the M spectral images $FTI_m$ includes a support limitation of a spectral space of each spectral matrix $FTMR_m$ to keep only the propagating waves and to remove any correspondence ambiguity between the spectral space of each spectral matrix $FTMR_m$ and that of the corresponding spectral image $FTI_m$ when the system (SYS) of reference frame change equations is not bijective.

10. An ultrasonic probing device (100), for ultrasonic probing of an object (102), comprising:

- a probe (104) comprising L ultrasonic transmitting and N ultrasonic receiving transducers ($108_1$, ..., $108_N$),
- means (114, 120) for controlling the L transmission transducers for M successive transmissions of ultrasonic waves,
- means (114, 120) for controlling the N receiving transducers in such a way as to receive simultaneously and for a predetermined duration, for each transmission, N measurement time signals, measuring in particular echoes due to back-scattering of said each transmission, and
- a processor (114, 124, 126, 128, 130, 132, 134) for reconstructing an ultrasound image (I) for visualizing the object (102), configured to perform the following processing:

  • temporal sampling of each measurement time signal in $N_t$ successive samples,
  • obtaining M matrices $MR_m$, $1 \leq m \leq M$, of ultrasonic time signals of size $N \times N_t$, each coefficient $MR_m(u_i, t_j)$ of each matrix $MR_m$ representing the $t_j$-th time sample of the measurement signal received by the ui-th receiving transducer due to the m-th transmission,
  • row and column two-dimensional Fourier transform of each matrix $MR_m$ to obtain M spectral matrices $FTMR_m$, $1 \leq m \leq M$,
  • conversion of each spectral matrix $FTMR_m$ to obtain M spectral images $FTI_m$ in a space of spatial frequencies, this conversion comprising the application of a relation (REL) of matrix transformation of the M matrices $FTMR_m$ into the M spectral images $FTI_m$ and the application of a bilinear interpolation using a system (SYS) of equations for change of reference frame,
  • combination of the M spectral images $FTI_m$ and two-dimensional inverse Fourier transformation in rows and columns of the resulting spectral image FTI to obtain an ultrasound image I of the object,

  **characterized in that** the processor is further configured to:

  - take into account a change of propagation mode during a backscatter in the probed object, by adding a parameter characterizing this change of mode in the equations (SYS) of change of reference frame, and/or
  - take into account a reflection against a wall of the probed object, by adding a phase shift term in the relation (REL) of matrix transformation,

  when it performs the conversion.

11. A computer program (118) downloadable from a communication network and/or stored on a computer-readable medium and/or executable by a processor (114), **characterized in that** it comprises instructions that lead the device according to claim 10 to carry out the steps of an imaging method (900) according to any one of claims 1 to 9, when said program is executed on a computer (112).

## Figure 1

## Figure 2

$T_1$   $T_{(M+1)/2}$   $T_M$

$ZE_1$   $ZE_{(M+1)/2}$   $ZE_M$

$\theta_1$   $\theta_{(M+1)/2} = 0$   $\theta_M$

z   z

## Figure 3

u

x

$\theta_m$

H

z

$M_2$

$M_1$

D

102

## *Figure 4*

## *Figure 5*

## Figure 6

LLL, TLL, TTT, LTT

$$kz = \frac{\cos\theta'_m}{1 - \sin\theta'_m} \cdot kx$$

$$kz = \frac{-\cos\theta'_m}{1 + \sin\theta'_m} \cdot kx$$

$FTMR_m(ku,kt)$

$FTI_m(kx,kz)$

## Figure 7

LLT, TLT

$$kz = \frac{\gamma\cos\theta'_m}{1 - \gamma\sin\theta'_m} \cdot kx$$

$$kz = \frac{-\gamma\cos\theta'_m}{1 + \gamma\sin\theta'_m} \cdot kx$$

$FTMR_m(ku,kt)$

$FTI_m(kx,kz)$

## Figure 8

TTL, LTL

$$kz = \frac{\cos\theta'_m}{\gamma - \sin\theta'_m} \cdot kx$$

$$kz = \frac{-\cos\theta'_m}{\gamma + \sin\theta'_m} \cdot kx$$

$FTMR_m(ku,kt)$

$FTI_m(kx,kz)$

# *Figure 9*

900

902

904 ⟶ $MR_m$, $1 \leq m \leq M$

906

908 ⟶ $FTMR_m$ , $1 \leq m \leq M$

REL, SYS ⟶ 910 ⟶ $FTI_m$ , $1 \leq m \leq M$

912 ⟶ FTI

914 ⟶ I

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE HUNTER et al.** The wavenumber algorithm for full-matrix imaging using an ultrasonic array. *IEEE Transactions on Ultrasonics, Ferroelectrics, and Frequency Control,* Novembre 2008, vol. 55 (11), 2450-2462

- **CHENG et al.** Extended high-frame rate imaging method with limited-diffraction beams. *IEEE Transactions on Ultrasonics, Ferroelectrics, and Frequency Control,* Mai 2006, vol. 53 (5), 880-899